# EUROPEAN PATENT SPECIFICATION

(11) **EP 2 905 679 B1**
(45) Date of publication and mention of the grant of the patent: **22.08.2018**
(21) Application number: 15150298.6
(22) Date of filing: 07.01.2015
(51) Int. Cl.: G06F 3/01, G06F 3/0485

(54) **Electronic device and method of controlling electronic device**
Elektronische Vorrichtung und Verfahren zur Steuerung einer elektronischen Vorrichtung
Dispositif électronique et procédé de contrôle dudit dispositif

(30) Priority: 07.01.2014 US 201461924542 P; 21.02.2014 KR 20140020935
(43) Date of publication of application: 12.08.2015
(73) Proprietor: Samsung Electronics Co., Ltd., Gyeonggi-do 443-742 (KR)
(72) Inventor: Kim, Changjin, Gyeonggi-do 443-742 (KR); Kwon, Jungtae, Gyeonggi-do 443-742 (KR); Kim, Namyun, Gyeonggi-do 443-742 (KR); Kim, Dongsub, Gyeonggi-do 443-742 (KR); Kim, Byeongjae, Gyeonggi-do 443-742 (KR); Kim, Kwangtai, Gyeonggi-do 443-742 (KR); Kil, Kwangmin, Gyeonggi-do 443-742 (KR); Kim, Seongwoon, Gyeonggi-do 443-742 (KR); Kim, Junghun, Gyeonggi-do 443-742 (KR); Song, Sejun, Gyeonggi-do 443-742 (KR); An, Haejun, Gyeonggi-do 443-742 (KR); Lee, Yohan, Gyeonggi-do 443-742 (KR); Cho, Hyerin, Gyeonggi-do 443-742 (KR)
(74) Representative: HGF Limited

(56) References cited:
- EP-A1- 2 450 775
- EP-A2- 2 595 043
- WO-A1-2013/111590
- US-A1- 2006 197 750
- US-A1- 2010 026 656
- US-A1- 2012 229 380
- US-A1- 2013 300 668

## Description

### TECHNICAL FIELD

The present disclosure relates to a method of recognizing auser input through a side surface of an electronic device and controlling the electronic device based on the recognized user input, and an electronic device including the method.

### BACKGROUND

Electronic devices, such as smart phones, tablet Personal Computers (PC), Portable Multimedia Players (PMPs), Personal Digital Assistants (PDAs), laptop PCs, and wearable devices, for example, wrist watches, Head-Mounted Displays (HMDs), and the like may perform not only a phone call function, but also various other functions (for example, games, Social Network Services (SNS), Internet, multimedia, and taking and displaying a picture or a video).

The above information is presented as background information only to assist with an understanding of the present disclosure. No determination has been made, and no assertion is made, as to whether any of the above might be applicable as prior art with regard to the present disclosure.

US-2006/0197750-A1 discloses hand held devices with multiple touch sensing devices, wherein the touch sensing devices may be selected from touch panels, touch screens or touch sensitive housings.

US-2013/0300668-A1 discloses grip-based device adaptations in which a touch-aware skin of a device is employed to adapt device behavior in a variety of ways.

EP-2450775-A1 discloses image orientation control in a handheld device. Said handheld device comprises at least one touch sensitive sensor located at at least one side of a display. An image orientation controller may be configured to control the orientation of the image depending on an output signal of the at least one touch sensitive sensor.

### SUMMARY

Aspects of the present disclosure are to address at least the above-mentioned problems and/or disadvantages and to provide at least the advantages described below. Accordingly, an aspect of the present disclosure is to provide an electronic device may acquire a user input through a display located on a front surface of the electronic device or a hardware key located on one side of the electronic device, and provide an application or a function of the electronic device based on the acquired input.

Another aspect of the present disclosure is to provide an electronic device including one or more sensor pads for acquiring a user input corresponding to at least one side surface portion of the electronic device, and a method of controlling the same. Another aspect of the present disclosure is to provide an electronic device for determining grip information of a user related to the electronic device and providing an application or a function through the electronic device based on at least one of the user input or the grip information, and a method of controlling the same.

In accordance with a first aspect of the present invention, an electronic device is provided as defined by appended independent claim 1. In accordance with a second aspect of the present invention, a control method is provided as defined by appended independent claim 8.

Also disclosed is an electronic device. The electronic device includes a display configured to output an image, and a controller functionally connected to the display,wherein the controller is configured to acquire a user input through at least one side surface of the display, to determine grip information on the user input related to the electronic device based on the user input, and to provide at least one of an application or a function corresponding to the grip information through the electronic device.

Also disclosed is a control method. The control method includes receiving a user input through one or more sensor pads included in a black mask of a display,determining grip information of a user related to an electronic device based on the user input, and providing an application or a function based on at least one of the user input and the grip information.

In accordance with another aspect of the present disclosure, a computer-readable recording medium recording a program for performing a method of controlling an electronic device in a computer is provided. The method includes receiving a user input through one or more sensor pads,determining grip information of a user related to the electronic device based on the user input, and providing one of an application and a function based on at least one of the user input and the grip information.

An electronic device and a method of controlling the same according to the present disclosure can recognize a user input through at least one side surface of the electronic device. An electronic device and a method of controlling the same according to the present disclosure can provide an application or a function through the electronic device based on at least some of the user grip information.

Other aspects, advantages, and salient features of the disclosure will become apparent to those skilled in the art from the following detailed description.

### BRIEF DESCRIPTION OF THE DRAWINGS

The above and other objects, features and advantages of certain embodiments of the present disclosure will be more apparent from the following description taken in conjunction with the accompanying drawings, in which:
FIG. 1 illustrates a network environment including an electronic device according to an embodiment of the present disclosure;
FIG. 2 is a block diagram of an electronic device according to an embodiment of the present disclosure;
FIGS. 3A, 3B. 3C,and 3D illustrate an electronic device including one or more sensor pads according to an embodiment of the present disclosure;
FIGS. 4A, 4B,and 4C are flowcharts illustrating a method of controlling an electronic device according to an embodiment of the present disclosure;
FIG. 5 illustrates a method of controlling a camera function according to an embodiment of the present disclosure;
FIG. 6 illustrates a method of controlling a media function according to an embodiment of the present disclosure;
FIGS. 7A and 7B illustrate a method of controlling information displayed on a display of an electronic device according to an embodiment of the present disclosure;
FIGS. 8A and 8B illustrate a method of controlling information displayed on a display of an electronic device according to an embodiment of the present disclosure;
FIG. 9 illustrates a method of controlling an application according to an embodiment of the present disclosure;
FIG. 10 illustrates a method of controlling a tab menu according to an embodiment of the present disclosure;
FIG. 11 illustrates a method of controlling selection lists according to an embodiment of the present disclosure;
FIG. 12 illustrates a block diagram of an electronic device according to an embodiment of the present disclosure;
FIG. 13 illustrates a method of controlling a sound output device of an electronic device according to an embodiment of the present disclosure;
FIG. 14 illustrates a method of controlling a screen output of an electronic device according to an embodiment of the present disclosure;
FIG. 15 illustrates a method of controlling illumination of a display of an electronic device according to an embodiment of the present disclosure;
FIGS. 16A ,16B, 16C, 16D, and 16E illustrate a method of controlling a display area of an electronic device according to an embodiment of the present disclosure;
FIG. 17 illustrates a method of controlling a lock screen of an electronic device according to an embodiment of the present disclosure;
FIGS. 18A and 18B illustrate a method of controlling a display area of an electronic device according to an embodiment of the present disclosure;
FIG. 19 illustrates a method of controlling an application according to an embodiment of the present disclosure;
FIGS. 20A, 20B,and 20C are flowcharts illustrating a method of controlling functions of an electronic device according to an embodiment of the present disclosure;
FIGS. 21A, 21B, 21C, 21D,and 21E illustrate a method of displaying a function object according to an embodiment of the present disclosure;
FIG. 22 illustrates a method of providing functions of an electronic device according to an embodiment of the present disclosure; and
FIGS. 23A, 23B, 23C, 23D,and 23E illustrate a method of providing functions of an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding, but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The expressions such as "first," "second," or the like used in various embodiments of the present disclosure may modify various component elements in the various embodiments but may not limit corresponding component elements. For example, the above expressions do not limit the sequence and/or importance of the corresponding elements. The expressions may be used to distinguish a component element from another component element. For example, a first user device and a second user device indicate different user devices although both of them are user devices. For example, without departing from the scope of the present disclosure, a first component element may be named a second component element. Similarly, the second component element also may be named the first component element.

It should be noted that if it is described that one component element is "coupled" or "connected" to another component element, the first component element may be directly coupled or connected to the second component, and a third component element may be "coupled" or "connected" between the first and second component elements. Conversely, when one component element is "directly coupled" or "directly connected" to another component element, it may be construed that a third component element does not exist between the first component element and the second component element.

In the present disclosure, the terms are used to describe a specific embodiment, and are not intended to limit the present disclosure. As used herein, the singular forms are intended to include the plural forms as well, unless the context clearly indicates otherwise.

Unless defined differently, all terms used herein, which include technical terminologies or scientific terminologies, have the same meaning as a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present disclosure.

An electronic device according to various embodiments of the present disclosure may be a device with a communication function. For example, the electronic device may include at least one of a smart phone, a tablet personal computer (PCs), a mobile phone, a video phone, an e-book reader, a desktop PC, a laptop PC, a netbook computer, a personal digital assistant (PDA), a portable multimedia player (PMP), a MP3 player, a mobile medical device, a camera, a wearable device (e.g., head-mounted-device (HMD) such as electronic glasses, electronic clothes, an electronic bracelet, an electronic necklace, an electronic appcessory, an electronic tattoo, or a smart watch).

According to various embodiments of the present disclosure, an electronic device may be a smart home appliance with a communication function. The smart home appliance may include at least one of, for example, a television, a Digital Video Disk (DVD) player, an audio player, a refrigerator, an air conditioner, a cleaner, an oven, a microwave oven, a washing machine, an air purifier, a set-top box, a TV box (e.g., HomeSync™ of Samsung, Apple TV™, or Google TV™), a game console, an electronic dictionary, an electronic key, a camcorder, or an electronic frame.

According to various embodiments of the present disclosure, the electronic device may include at least one of various medical devices {e.g., a magnetic resonance angiography (MRA), a magnetic resonance imaging (MRI), a computed tomography (CT) machine, and an ultrasonic machine}, navigation devices, global positioning system (GPS) receivers, event data recorders (EDR), flight data recorders (FDR), vehicle infotainment devices, electronic devices for ships (e.g., navigation devices for ships, and gyro-compasses), avionics, security devices, automotive head units, robots for home or industry, automatic teller's machines (ATMs) in banks, or point of sales (POS) in shops.

According to various embodiments of the present disclosure, the electronic device may include at least one of furniture or a part of a building/structure having a communication function, an electronic board, an electronic signature receiving device, a projector, or various measuring equipment (e.g., equipment for a water supply, an electricity, gases or radio waves). An electronic device according to various embodiments of the present disclosure may be a combination of one or more of above described various devices. An electronic device according to various embodiments of the present disclosure may be a flexible device. However, an electronic device according to various embodiments of the present disclosure is not limited to the above described devices.

Hereinafter, an electronic device according to various embodiments of the present disclosure will be described with reference to the accompanying drawings. In various embodiments of the present disclosure, the term "user" may indicate a person using an electronic device or a device (e.g. an artificial intelligence electronic device) using an electronic device.

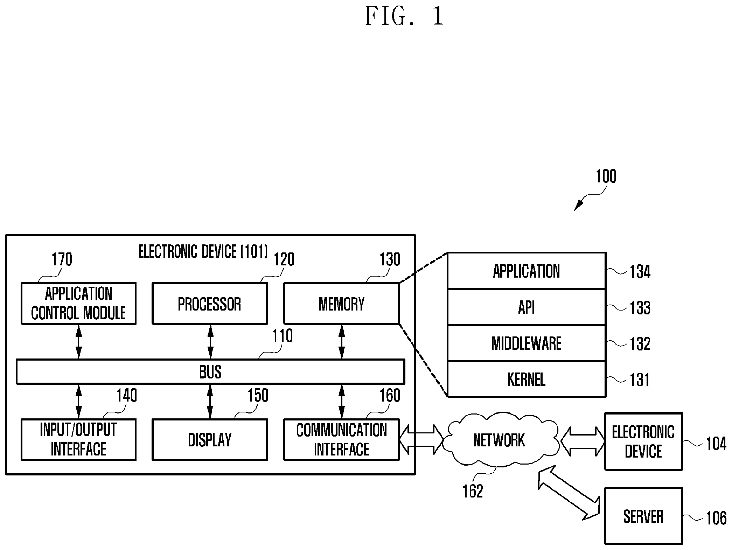

FIG. 1 illustrates a network environment including an electronic device according to an embodiment of the present disclosure.

Referring to FIG. 1, the network environment 100 includes an electronic device 101 that communicates with another electronic device 104 and a server 106 over a network 162.The electronic device 101 may include a bus 110, a processor 120, a memory 130, an input/output interface 140, a display 150, a communication interface 160, and an application control module 170.

The bus 110 may be a circuit connecting the above described components and transmitting communication (for example, a control message) between the above described components.

The processor 120 may receive commands from other components (for example, the memory 130, the input/output interface 140, the display 150, the communication interface 160, and the application control module 170) through the bus 110, may interpret the received commands, and may execute calculation or data processing according to the interpreted commands. A controller of an electronic device 200 may be implemented by the processor 120.

The memory 130 may store commands or data received from the processor 120 or other components, for example, the input/output interface 140, the display 150, the communication interface 160, the application control module 170, and the like, or may store commands or data generated by the processor 120 or other components. The memory 130 may include programming modules, for example, a kernel 131, middleware 132, an Application Programming Interface (API) 133, or applications 134. Each of the programming modules described above may be formed of software, firmware, and hardware, or a combination thereof.

The kernel 131 may control or manage system resources (for example, the bus 110, the processor 120, or the memory 130) used for executing an operation or a function implemented in other programming modules, for example, the middleware 132 or the API 133. The kernel 131 may provide an interface that enables the middleware 132, the API 133, or the applications 134 to access an individual component of the electronic device 100 for control or management.

The middleware 132 may function as a relay so that the API 133 or the applications 134 communicate with the kernel 131 to receive and transmit data. In association with operation requests received from the applications 134, the middleware 132 may execute a control (for example, scheduling or load balancing) for an operation request by using, for example, a method of assigning a priority by which the system resources (for example for example, the bus 110, the processor 120, or the memory 130) of the electronic device 100 can be used for at least one of the applications 134.

The API 133 is an interface used by the applications 134 to control a function provided from the kernel 131 or the middleware 132, and may include, for example, at least one interface or function (for example, a command) for a file control, a window control, image processing, or a character control.

According to various embodiments of the present disclosure, the applications 134 may include a Short Message Service (SMS)/Multimedia Messaging Service (MMS) application, an email application, a calendar application, an alarm application, a health care application (for example, an application for measuring a quantity of exercise, blood sugar, and the like.), an environment information application (for example, an application for providing information on atmospheric pressure, humidity, temperature, and the like.). Additionally or alternatively, the applications 134 may be applications associated with exchanging information between the electronic device 100 and an external electronic device (for example, an electronic device 104). The application related to the information exchange may include, for example, a notification transmission application for transferring predetermined information to an external electronic device or a device management application for managing an external electronic device.

For example, the notification transmission application may include a function of transferring, to the external electronic device (e.g., the electronic device 104), notification information generated from other applications of the electronic device 100 (e.g., an SMS/MMS application, an e-mail application, a health management application, an environmental information application, and the like.). Additionally or alternatively, the notification transmission application may, for example, receive notification information from an external electronic device (e.g., the electronic device 104) and provide the notification information to a user. The device management application may manage (e.g., install, delete, or update), for example, a function of at least a part of an external electronic device (e.g., the electronic device 104) that communicates with the electronic device 100 (e.g., turning on/off the external electronic device (or a few component) or adjusting brightness (or resolution) of a display), an application operated in the external electronic device, or a service provided from the external electronic device (e.g., a call service or a message service).

According to various embodiments of the present disclosure, the applications 134 may include an application designated according to properties (for example, the type of electronic device) of an external electronic device (for example, the electronic device 104). For example, when the external electronic device is an MP3 player, the applications 134 may include an application related to the reproduction of music. Similarly, when the external electronic device is a mobile medical device, the applications 134 may include an application related to health care. According to an embodiment of the present disclosure, the applications 134 may include at least one of an application designated to the electronic device 100 and an application received from an external electronic device (for example, a server 106 or the electronic device 104).

The input/output interface 140 may transfer a command or data input by a user through an input/output device (for example, a sensor, a keyboard, or a touch screen) to the processor 120, the memory 130, the communication interface 160, or the application control module 170, for example, through the bus 110. The input/output interface 140 may provide the processor 120 with data on a user's touch input through a touch screen. Further, the input/output interface 140 may output, for example, a command or data received through the bus 110 from the processor 120, the memory 130, the communication interface 160, and the application control module 170, through an input/output device (for example, a speaker or a display). For example, the input/output interface 140 may output voice data processed by the processor 120 to the user through a speaker.

The display 150 may display various pieces of information (for example, multimedia data, text data, and the like.) to a user.

The communication interface 160 may connect communication between the electronic device 100 and an electronic device (e.g., the electronic device 104 or the server 106). For example, the communication interface 160 may be connected to the network 162 through wireless communication or wired communication, and may communicate with an external device. The wireless communication may include at least one of, for example, Wi-Fi, Bluetooth (BT), Near Field Communication (NFC), Global Positioning System (GPS) and cellular communication (for example, Long Term Evolution (LTE), LTE-A, Code Division Multiple Access (CDMA), Wideband Code Division Multiple Access (WCDMA), Universal Mobile Telecommunication System (UMTS), Wireless Broadband (WiBro), Global System for Mobile communication (GSM), and the like.). The wired communication may include at least one of, for example, a Universal Serial Bus (USB), a High Definition Multimedia Interface (HDMI), a Recommended Standard 232 (RS-232), and a Plain Old Telephone Service (POTS).

According to an embodiment of the present disclosure, the network 162 may be a telecommunication network. The communication network may include at least one of a computer network, the Internet, the Internet of things, or a telephone network. A protocol (for example, a transport layer protocol, a data link layer protocol, or a physical layer protocol) for the communication between the electronic device 100 and the external device may be supported by at least one of the applications 134, the application programming interface 133, the middleware 132, the kernel 131, and the communication interface 160.

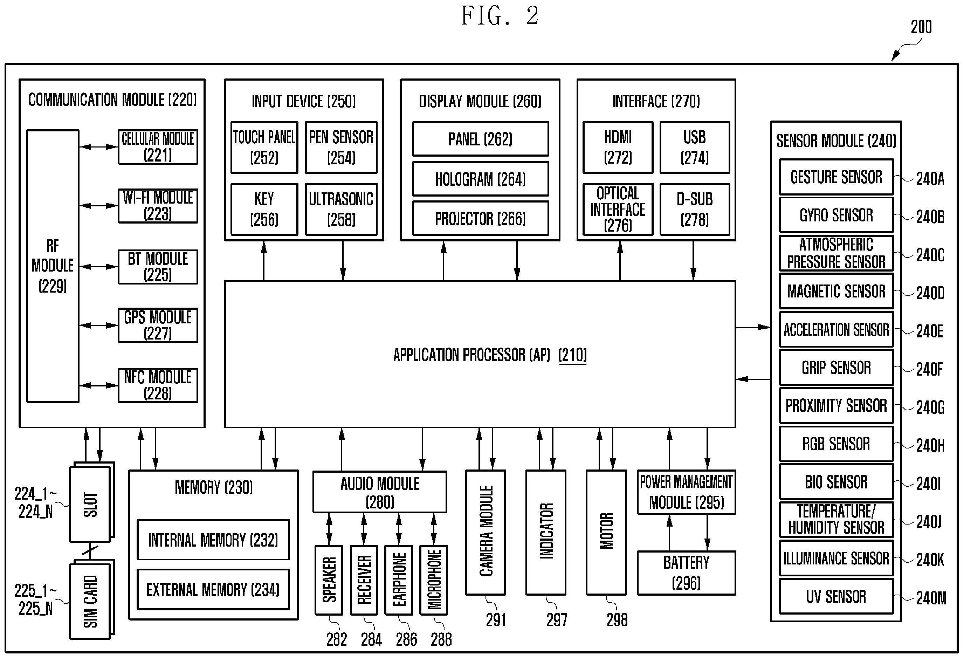

FIG. 2 is a block diagram of an electronic device according to various embodiments of the present disclosure.

Referring to FIG. 2, the electronic device 200 may include at least one application processor (AP) 210, a communication module 220, one or more slots 224-1 to 224-N for one or more subscriber identification module (SIM) cards 225-1 to 225-N, a memory 230, a sensor module 240, an input device 250, a display 260, an interface 270, an audio module 280, a camera module 291, a power management module 295, a battery 296, an indicator 297, and a motor 298.

The AP 210 may drive an operating system or an application program so as to control a plurality of hardware or software components connected to the AP 210, and may execute data processing and operations associated with various types of data including multimedia data. For example, the AP may be implemented by a System on Chip (SOC). According to an embodiment of the present disclosure, the AP 210 may further include a Graphic Processing Unit (GPU) (not illustrated).

The communication module 220 (e.g., the communication interface 160) may perform data transmission/reception in communication between the electronic device 200 (e.g., the electronic device 100 of FIG. 1) and other electronic devices (e.g., the electronic device 104 and the server 106 of FIG. 1) connected thereto through the network 162. According to an embodiment of the present disclosure, the communication module 220 may include a cellular module 221, a Wi-Fi module 223, a BT module 225, a GPS module 227, an NFC module 228, and a Radio Frequency (RF) module 229.

The cellular module 221 may provide a voice, a call, a video call, a Short Message Service (SMS), or an Internet service through a communication network (for example, LTE, LTE-A, CDMA, Wideband CDMA (WCDMA), UMTS, WiBro, or GSM). The cellular module 221 may distinguish between and authenticate electronic devices within a communication network by using a subscriber identification module (for example, the SIM card 224). The cellular module 221 may perform at least some of the functions which the AP 210 can provide. For example, the cellular module 221 may perform at least the part of multimedia control functions.

According to an embodiment of the present disclosure, the cellular module 221 may include a Communication Processor (CP). For example, the CP 221 may be implemented by an SoC. Although the components such as the cellular module 221 (for example, communication processor), the memory 230, and the power management module 295 are illustrated as components separated from the AP 210, the AP 210 may include at least some of the above described components (for example, the cellular module 221).

According to an embodiment of the present disclosure, the AP 210 or the cellular module 221 (e.g., communication processor) may load a command or data received from at least one of a non-volatile memory and other components connected thereto to a volatile memory and process the loaded command or data. The AP 210 or the cellular module 221 may store data received from or generated by at least one of the other components in a non-volatile memory.

Each of the Wi-Fi module 223, the BT module 225, the GPS module 227, and the NFC module 228 may include a processor for processing data transmitted/received through the corresponding module.

Although the cellular module 221, the WiFi module 223, the BT module 225, the GPS module 227, and the NFC module 228 are illustrated as blocks separated from each other, at least some (for example, two or more) of the cellular module 221, the WiFi module 223, the BT module 225, the GPS module 227, and the NFC module 228 may be included in one Integrated Chip (IC) or one IC package. For example, at least some (e.g., a communication processor corresponding to the cellular module 221 and a Wi-Fi processor corresponding to the Wi-Fi module 223) of the processors corresponding to the cellular module 221, the Wi-Fi module 223, the BT module 225, the GPS module 227, and the NFC module 228, respectively, may be implemented as one SoC.

The RF module 229 may transmit/receive data, such as an RF signal. For example, the RF module 229 may include a transceiver, a Power Amp Module (PAM), a frequency filter, a Low Noise Amplifier (LNA) and the like. The RF module 229 may further include a component for transmitting/receiving an electromagnetic wave over the air in radio communication, such as a conductor or a conducting wire. Although the cellular module 221, the WiFi module 223, the BT module 225, the GPS module 227, and the NFC module 228 are illustrated to share one RF module 229, at least one of the cellular module 221, the WiFi module 223, the BT module 225, the GPS module 227, and the NFC module 228 may transmit/receive an RF signal through a separate RF module according to an embodiment.

The SIM cards 225_1 to 225_N may be cards including a subscriber identification module and may be inserted into slots 224_1 to 224_N formed on a particular portion of the electronic device 200. The SIM card 225_1 to 225_N may include unique identification information (for example, an Integrated Circuit Card Identifier (ICCID)) or subscriber information (for example, an International Mobile Subscriber Identity (IMSI)).

The memory 230 (e.g., the memory 130 of FIG. 1) may include an internal memory 232 or an external memory 234. The internal memory 232 may include, for example, at least one of a volatile memory (for example, a Dynamic RAM (DRAM), a Static RAM (SRAM), a Synchronous Dynamic RAM (SDRAM), and the like), and a non-volatile Memory (for example, a One Time Programmable ROM (OTPROM), a Programmable ROM (PROM), an Erasable and Programmable ROM (EPROM), an Electrically Erasable and Programmable ROM (EEPROM), a mask ROM, a flash ROM, a NAND flash memory, an NOR flash memory, and the like).

According to an embodiment of the present disclosure, the internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 234 may be functionally connected to the electronic device 200 through various interfaces. According to an embodiment, the electronic device 200 may further include a storage device (or storage medium) such as a hard drive.

The sensor module 240 may measure a physical quantity or detect an operational state of the electronic device 200, and may convert the measured or detected information to an electronic signal. The sensor module 240 may include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a Red/Green/Blue (RGB) sensor), a bio-sensor 2401, a temperature/humidity sensor 240J, an illumination sensor 240K, and an Ultra Violet (UV) sensor 240M. Additionally or alternatively, the sensor module 240 may include, for example, an E-nose sensor (not illustrated), an electromyography (EMG) sensor (not illustrated), an electroencephalogram (EEG) sensor (not illustrated), an electrocardiogram (ECG) sensor (not illustrated), an Infrared (IR) sensor, an iris sensor (not illustrated), a fingerprint sensor and the like. The sensor module 240 may further include a control circuit for controlling one or more sensors included therein.

In the present disclosure, the term "sensor" may refer to one or more devices, components, hardware, firmware, or software, or a combination of two or more thereof which are configured to detect a change in at least one physical phenomenon according to a movement of an external object and sense a user's gesture.

The input device 250 may include a touch panel 252, a (digital) pen sensor 254, a key 256, or an ultrasonic input device 258. For example, the touch panel 252 may recognize a touch input in at least one of a capacitive type, a resistive type, an infrared type, and an acoustic wave type. The touch panel 252 may further include a control circuit. The capacitive type touch panel may recognize physical contact or proximity. The touch panel 252 may further include a tactile layer. In this case, the touch panel 252 may provide a user with a tactile reaction.

For example, the pen sensor 254 may be implemented using a method identical or similar to a method of receiving a touch input of a user, or using a separate recognition sheet. The key 256 may include a physical button, an optical key, a keypad, or a touch key. The ultrasonic input device 258 is a device which can detect an acoustic wave using a microphone (for example, the microphone 288) of the electronic device 200 through an input tool generating an ultrasonic signal to identify data and can perform wireless recognition. According to an embodiment of the present disclosure, the electronic device 200 may use the communication module 220 to receive a user input from an external device connected thereto (for example, a computer or a server).

The display 260 (e.g., the display 150 of FIG. 1) may include a display panel 262, a hologram device 264, or a projector 266. For example, the display panel 262 may be a Liquid Crystal Display (LCD), an Active Matrix Organic Light Emitting Diode (AM-OLED) or the like. For example, the display panel 262 may be implemented to be flexible, transparent, or wearable. The display panel 262 may also be configured as one module together with the touch panel 252. The hologram device 264 may show a three dimensional image in the air by using an interference of light. The projector 266 may project light on a screen to display an image. The screen may be located inside or outside the electronic device 200. According to an embodiment of the present disclosure, the display 260 may further include a control circuit for controlling the display panel 262, the hologram device 264, or the projector 266.

The interface 270 may include a HDMI 272, a USB 274, an optical interface 276, or a D-sub 278. The interface 270 may be included in the communication interface 160 illustrated in FIG. 1. Additionally or alternatively, the interface 270 may include, for example, a Mobile High-definition Link (MHL) interface, a SD/Multi-Media Card (MMC) interface, or an Infrared Data Association (IrDA) standard interface.

The audio module 280 may bidirectionally convert a sound and an electrical signal. At least some components of the audio module 280 may be included in the input/output interface 140 illustrated in FIG. 1. The audio module 280 may process sound information input or output through a speaker 282, a receiver 284, earphones 286, or a microphone 288.

According to an embodiment of the present disclosure, the camera module 291 is a device which can photograph a still image and a moving image. The camera module 291 may include one or more image sensors (for example, a front sensor or a rear sensor), a lens (not illustrated), an Image Signal Processor (ISP) (not illustrated) or a flash (not illustrated) (for example, an LED or xenon lamp).

The power management module 295 may manage power of the electronic device 200. Although not illustrated, the power management module 295 may include, for example, a Power Management Integrated Circuit (PMIC), a charger Integrated Circuit (IC), or a battery or fuel gauge.

The PMIC may be mounted within, for example, an integrated circuit or an SoC semiconductor. Charging methods may be classified into a wired charging method and a wireless charging method. The charger IC may charge a battery and prevent introduction of over-voltage or over-current from a charger. The charger IC may include a charger IC for at least one of the wired charging method and the wireless charging method. The wireless charging method may include a magnetic resonance scheme, a magnetic induction scheme, or an electromagnetic scheme, and an additional circuit for wireless charging, such as a coil loop circuit, a resonance circuit, a rectifier circuit, and the like may be added.

For example, the battery gauge may measure the remaining amount in a battery 296, and the charging voltage and current, or the temperature. The battery 296 may store or generate electricity and may supply power to the electronic device 200 by using the stored or generated electricity. The battery 296 may include a rechargeable battery or a solar battery.

The indicator 297 may display a predetermined state of the electronic device 200 or a part of the electronic device 200 (for example, the AP 210), such as a booting state, a message state, a charging state, or the like. The motor 298 may convert an electrical signal into a mechanical vibration. Although not illustrated, the electronic device 200 may include a processing unit (for example, a GPU) for supporting mobile TV. The processing unit for supporting mobile TV may process media data according to a standard of Digital Multimedia Broadcasting (DMB), Digital Video Broadcasting (DVB), media flow, or the like.

Each of the components of the electronic device according to the present disclosure may be implemented by one or more components and the name of the corresponding component may vary depending on a type of the electronic device. The electronic device according to the present disclosure may include one or more of the aforementioned components or may further include other additional components, or some of the aforementioned components may be omitted. Further, some of the components of the electronic device according to the present disclosure may be combined to be one entity, which can perform the same functions as those of the components before the combination.

The term "module" used in the present disclosure may refer to, for example, a unit including a combination of one or more of hardware, software, and firmware. The "module" may be interchangeable with a term, such as unit, logic, logical block, component, or circuit. The "module" may be the smallest unit of an integrated component or a part thereof. The "module" may be the minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

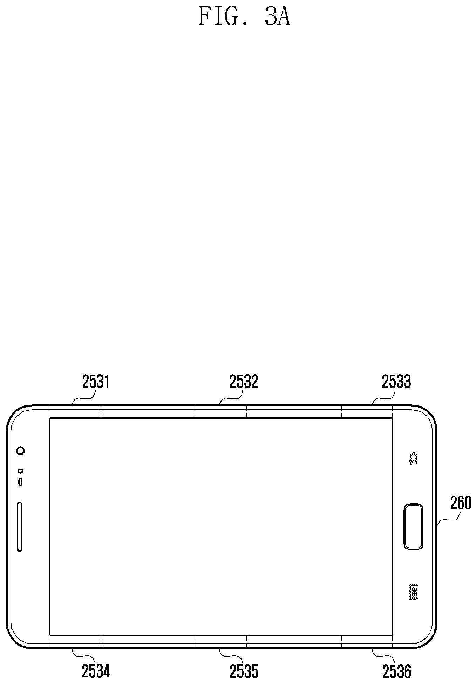

FIGS. 3A to 3D illustrate an electronic device including one or more sensor pads according to an embodiment of the present disclosure.

Referring to FIGS. 3A to 3D, a display (for example, the display 260) of the electronic device 200 may be implemented by, for example, a touch screen including a display panel (for example, the display panel 262) for outputting an image and the touch screen 252. According to an embodiment of the present disclosure, the display 260 may include a touch controller (or a touch IC 2700), a main touch sensor (for example, the touch panel 252), one or more sensor pads 2531, 2532, 2533, 2534, 2535, and 2536, and one or more traces 2631, 2632, 2633, 2634, 2635, and 2636.

The touch controller 2700 supplies current to, for example, the main touch sensor (for example, the touch panel 252) or the one or more sensor pads 2531, 2532, 2533, 2534, 2535, and 2536, and may receive a signal generated due to a touch input by a user's finger from the main touch sensor (for example, the touch panel 252) or the one or more sensor pads 2531, 2532, 2533, 2534, 2535, and 2536. For example, the touch controller 2700 may be connected to the main touch sensor through the one or more traces 2631, 2632, 2633, 2634, 2635, and 2636. According to an embodiment, when the main touch sensor detects a user input (for example, a touch input), the touch controller 2700 may receive a signal corresponding to the user input (for example, the touch input) from the main touch sensor through the one or more traces 2631, 2632, 2633, 2634, 2635, and 2636. Further, the touch controller 2700 may be connected to the one or more sensor pads 2531, 2532, 2533, 2534, 2535, and 2536. When a user input is made through the one or more sensor pads 2531, 2532, 2533, 2534, 2535, and 2536, the touch controller 2700 may receive a signal corresponding to the user input (for example, the touch input) through the one or more traces 2631, 2632, 2633, 2634, 2635, and 2636 connected to the one or more sensor pads 2531, 2532, 2533, 2534, 2535, and 2536.

The touch controller 2700 may calculate data such as a coordinate where the touch is input by an object, such as a user's finger, based on signals received from the main touch sensor (for example, the touch panel 252) or the one or more sensor pads 2531, 2532, 2533, 2534, 2535, and 2536. To this end, the touch controller 2700 may further include an Analog to Digital Converter (ADC) and a Digital Signal Processor (DSP). The ADC may convert an analog type signal to a digital type signal and output the converted signal to the DSP. The DSP may calculate a touch input coordinate (for example, x and y coordinates of a touched position) based on the digital type signal output from the ADC.

The touch controller 2700 may support a capacitive type. For example, the touch controller 2700 may support both a self capacitive (capacitance between a sensor pad (or an electrode) and a ground) type and a mutual capacitive (capacitance between a driving line and a reception line) type. To this end, the touch controller 2700 may further include a switching element for providing a switching function between the self-capacitive type and the mutual capacitive type. According to an input by an external object such as a user's finger, for example, when an external object contacts the display 260 in a state where a proximity touch is made as the external object approaches the display 260, the touch controller 2700 may make a control to switch from the self capacitive type to the mutual capacitive type through the switching element in order to receive the contact touch input. In addition to the capacitive type, the touch controller 2700 may support other various types such as a resistive overlay type, a pressure type, an infrared beam type, and a surface acoustic wave type. When functions of the touch controller 2700 are performed by another module, such as the processor 120, the touch controller 2700 may be omitted.

The main touch sensor (e.g., the touch panel 252) may receive a user input (e.g., a touch input) from an external object such as a user's finger. The main touch sensor (for example, the touch panel 252) may include one or more electrodes to receive a touch from an external object.

In one embodiment of the present disclosure, when the main touch sensor (e.g., the touch panel 252) supports a self-capacitive type, electrodes may be patterned in the form of a plurality of strips arranged flat or in the form of intersecting (or crossing but not contacting) x and y axes of an orthogonal coordinate system. However, such an electrode pattern is only an example, and the electrodes may be arranged in various forms such as a square, a circle, an oval, a triangle, and a polygon as well as a diamond. Further, when the current is supplied to the main touch sensor (for example, the touch panel 252) through the one or more traces 2631, 2632, 2633, 2634, 2635, and 2636, the main touch sensor (for example, the touch panel 252) may detect the current through a change in capacitance formed between objects, such as a size of the change in the capacitance or a time when the capacitance is changed. The main touch sensor (for example, the touch panel 252) may transmit a signal including the detected change in the capacitance to the touch controller 2700. Accordingly, the touch controller 2700 may calculate a coordinate where a user input (for example, a touch input) is detected.

In another embodiment of the present disclosure, when the main touch sensor (e.g., the touch panel 252) supports the mutual capacitive type, the main touch sensor (e.g., the touch panel 252) may include two or more electrodes. For example, each of the two or more electrodes may form a driving electrode (sometimes referred to as a "driving line") on an x axis and a reception electrode (sometimes referred to as a "sensing electrode") on a y axis of an orthogonal coordinate system. Further, when the current is supplied to the driving electrode of the main touch sensor, the reception electrode may receive generated electric lines of force from the driving electrode (or from capacitance between the driving electrode and the reception electrode). When an object contacts a touch screen, the main touch sensor (e.g., the touch panel 252) may detect a change in electric lines of force (e.g., a change in the number of electric lines of force or a change in parasitic capacitance between an external object and the reception electrode) received by the reception electrode. The main touch sensor (e.g., the touch panel 252) may transmit a signal including the detected change in the electric lines of force to the touch controller 2700 and calculate a coordinate where the user input (e.g., the touch input) is detected.

According to an embodiment of the present disclosure, the one or more sensor pads 2531, 2532, 2533, 2534, 2535, and 2536 may be implemented in the capacitive type, and each of the one or more sensor pads 2531, 2532, 2533, 2534, 2535, and 2536 may include electrodes. The one or more sensor pads 2531, 2532, 2533, 2534, 2535, and 2536 may receive a signal for a proximity touch input from a side surface of the electronic device 200. The one or more sensor pads 2531, 2532, 2533, 2534, 2535, and 2536 are connected to the touch controller 2700 through the traces 2631, 2632, 2633, 2634, 2635, and 2636, and may transmit signals received by the one or more sensor pads 2531, 2532, 2533, 2534, 2535, and 2536 to the touch controller 2700. At least one of the one or more sensor pads 2531, 2532, 2533, 2534, 2535, and 2536 may additionally include a pressure sensor (for example, a piezoelectric pressure sensor or a piezo sensor) or may be substantially implemented by the pressure sensor.

Although the sensor pads 2531, 2532, and 2533 arranged on one side of the electronic device 200 and the sensor pads 2534, 2535, and 2536 arranged on the other side of the electronic device 200 are illustrated, the present disclosure is not limited thereto. The arrangement and the number of sensor pads 2531, 2532, 2533, 2534, 2535, and 2536 may vary. For example, according to the number or positions of the touch controllers 2700, an arrangement form of the traces 2631, 2632, 2633, 2634, 2635, and 2636 connecting the touch controller 2700 and the electrode pattern included in the touch sensor 252, the number of sensor pads 2531, 2532, 2533, 2534, 2535, and 2536 may be six or more. Further, the sensor pads 2531, 2532, 2533, 2534, 2535, and 2536 may be arranged only on one side of the electronic device 200 or only on the other side of the electronic device 200, or may be arranged on the upper, lower, or rear side of the electronic device 200. Additionally or alternatively, the sensor pads 2531, 2532, 2533, 2534, 2535, and 2536 may be exposed to the outside of the electronic device 200 or may be mounted inside the electronic device 200.

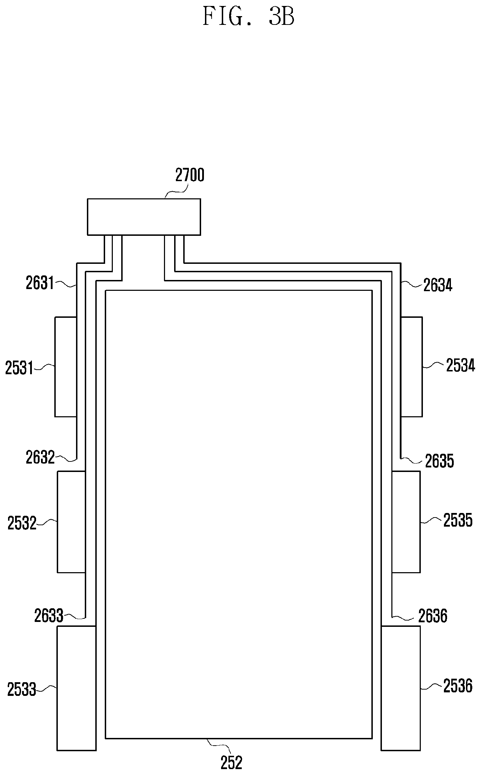

According to an embodiment of the present disclosure, the sensor pad 253 may be arranged in a part where the traces 2631, 2632, 2633, 2634, 2635, and 2636 connecting the main touch sensor (or electrodes included in the main touch sensor) and the touch controller 2700 are formed. Although the sensor pad 253 and the main touch sensor 252 are illustrated as separated components through FIGS. 3A and 3B, the sensor pad 253 and the main touch sensor 252 may be implemented as one hardware module according to an embodiment. Although the sensor pads 2531, 2532, 2533, 2534, 2535, and 2536 are illustrated as separated components in FIGS. 3A and 3B, at least some of the sensor pads and the main touch sensor 252 may be implemented as one hardware module.

The main touch sensor and at least one sensor pad may be formed of a transparent conductive medium such as Indium Tin Oxide (ITO), Indium Zinc Oxide (IZO), Al doped ZnO (AZO), Carbone NanoTube (CNT), conductive polymer (PEDOT), Ag, Cu, or the like.

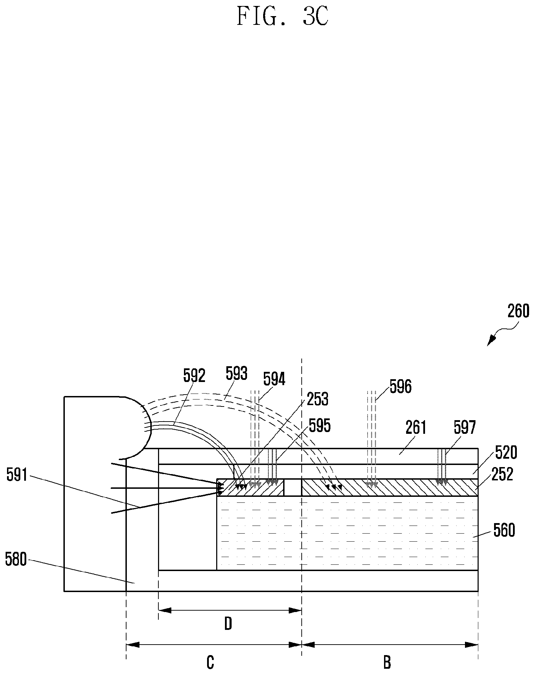

FIG. 3C illustrates a signal input of the electronic device 200 according to various embodiments of the present disclosure. FIG. 3C illustrates a signal generated by the display 260 based on a relationship with an object which contacts or approaches a side surface of a housing 580 of the electronic device 200 according to various embodiments of the present disclosure.

The electronic device 200 may include a window 261, a main touch sensor (e.g., the touch panel 252), the sensor pad 253, the display 260, and housing 580.

The sensor pad 253 and the main touch sensor (e.g., the touch panel 252) may be integrated within the display 260. Alternatively, the main touch sensor (e.g., the touch panel 252) may be expanded to at least the part of a display area B (e.g., an area of the display panel 262) of the display 260.

The window 261 may prevent damage on the electronic device 200 due to pressure or external stimulation. The window 261 may be formed of a transparent material, for example, Poly Carbonate (PC) of a glass material or a plastic material.

An adhesive layer 520 may provide an adhesive function. For example, the adhesive layer 520 may fix the window 261 and a polarizing layer of the display 260 together. The adhesive layer 520 may be formed of a mediator having excellent visibility, for example, Optically Clear Adhesive (OCA) or Super View Resin (SVR). However, the adhesive layer 520 may be omitted in some embodiments.

The display 260 may include the polarizing layer and a display layer 560. The polarizing layer may pass light in a particular direction among lights emitted from the display layer 560. The display layer 560 may include a Liquid Crystal Display (LCD), an Active Matrix Organic Light Emitting Diode (AM-OLED), a flexible display, or a transparent display. In addition, the display 260 may be put on one side of the housing 580 and may include a display area and a non-display area. The display 260 may be deposited on a lower side surface of the housing 580 and may include a display area B which displays screen data and a non-display area which does not display screen data.

The housing 580 may be disposed on one surface of the electronic device 200 and support the window 261, the main touch sensor (for example, the touch panel 252), the sensor pad 253, and the display 260.

Based on a horizontal axis, the electronic device 200 may be divided into a screen display area B which displays data on a screen and a screen non-display area C (or a black mask area) which does not display data on a screen.

The display 260 may receive various signals from an object such as a finger through the sensor pad 253 or the main touch sensor 252. For example, when a finger contacts a side surface of the electronic device 200 (for example, one side surface of the electronic device 200 or a boundary area between one surface of the electronic device 200 and another surface of the electronic device 200 which is connected to the one surface), the sensor pad 253 may receive a first signal 591 by a user input (for example, a touch input) from a part of the finger which is located within a predetermined range from a side surface of the housing 580 adjacent to the sensor pad 253 or the main touch sensor 252. When an object such as a finger contacts a horizontal surface of the side surface of the housing 580 (for example, a finger contacts an upper side surface of the housing 580), the sensor pad 253 may receive a second signal 592 from a part of the finger which is located within a predetermined range from the side surface of the housing 580. Similarly, the main touch sensor 252 may receive a third signal 593 from a part of the finger which is located within a predetermined range from the upper side surface of the housing 580.

In one embodiment of the present disclosure, the sensor pad 253 may transmit the first signal 591 and the second signal 592 to the touch controller 2700. The touch controller 2700 may calculate a coordinate based on the first signal 591 and the second signal 592. In another embodiment of the present disclosure, the main touch sensor 252 may transmit the received third signal 593 to the touch controller 2700 and the touch controller 2700 may calculate a more accurate coordinate based on the first signal 591, the second signal 592, and the third signal 593. The above embodiments are only examples and do not limit the technical idea of the present disclosure. For example, in another embodiment, when a size of the first signal 591 is small, the first signal 591 may be amplified and then output. To this end, an amplifier circuit may be additionally configured in hardware or a method of giving a weighted value to the first signal 591 in software may be adopted.

The sensor pad 253 may receive a fourth signal 594 or a fifth signal 595 by a user input (for example, a touch input). Further, the main touch sensor 252 may receive a sixth signal 596 or a seventh signal 597 by a user input (for example, a touch input). The sensor pad 253 and the main touch sensor 252 may transmit the fourth signal 594 to the seventh signal 597 to the touch controller 2700. In one embodiment, the touch controller 2700 may distinguish the first signal 591 to the seventh signal 597 based on a change in capacitance of a received input, for example, difference of electric lines of force formed in a relationship between an object and the sensor pad 253 or the main touch sensor 252 (for example, a direction of electric lines of force).

In one embodiment of the present disclosure, the processor 120 may configure four operation modes according to whether the sensor pad 253 and the main touch sensor 252 are activated/deactivated. Table 1 below shows the four operation modes.

**Table 1**

| | First mode | Second mode | Third mode | Fourth mode (lock mode) |
|---|---|---|---|---|
| Touch pad | Activated | Activated | Deactivated | Deactivated |
| Main touch sensor | Deactivated | Deactivated | Activated | Deactivated |

The activation of the sensor pad 253 may allow the sensor pad 253 to receive only the first signal 591 and the second signal 592 generated by a user input (for example, a touch input) on one surface of the electronic device 200 (for example, exclude or filter the fourth signal 594 and the fifth signal 595 received by the sensor pad 253). For example, among the first signal 591, the second signal 592, the fourth signal 594, and the fifth signal 595, the fourth signal 594 and the fifth signal 595 may be configured to be filtered and deleted by the touch controller 2700 or the processor 120. Further, the activation of the main touch sensor 252 may allow only the sixth signal 596 or the seventh signal 597 by a user input (for example, a touch input) to be received. For example, among the third signal 593, the sixth signal 596, and the seventh signal 597 received by the main touch sensor 252, the third signal 593 may be filtered and deleted by the touch controller 2700 or the processor 120. The four operation modes may be configured by the user. The four operation modes may also be configured according to an application being executed. For example, when an MP3 application is configured to operate in a second mode, the main touch sensor 252 may be deactivated or an input received by the main touch sensor 252 may be invalidated while the MP3 application is executed. In contrast, an input received by the sensor pad 253 may be validated.

The four operation modes are only examples and do not limit the technical idea of the present disclosure. For example, various operation modes may be configured according to a combination of validation/invalidation of the first signal 591 to the seventh signal 597 based on the first signal 591 to the seventh signal 597.

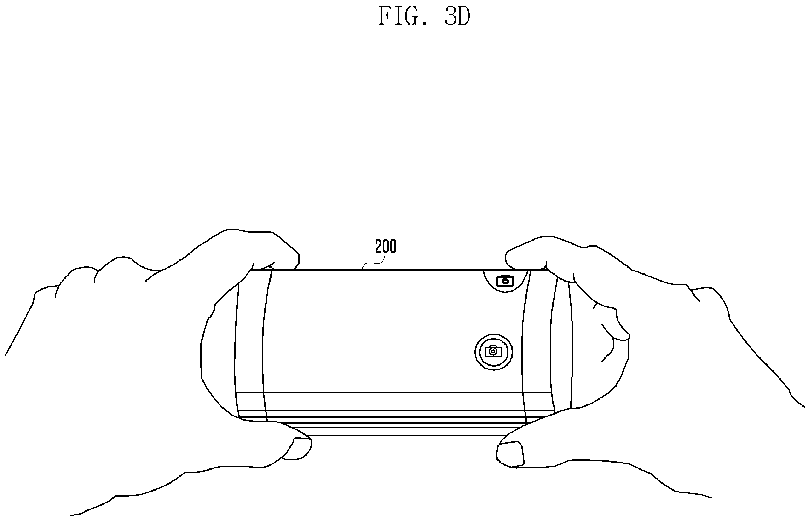

As illustrated in FIG. 3D, the electronic device 200 may be implemented with a wrap-around display 260. The electronic device 200 may include a display in an area corresponding to at least one side surface of the electronic device. For example, the display 260 may include an edge portion of the electronic device 200 (e.g., an area from one side to the other side). The wrap-around display 260 may be formed by directly connecting an end of a front surface of the electronic device 200 having the wrap-around display 260 and an end of a rear surface of the electronic device 200 (e.g., edges of the front surface and the rear surface contact each other or the front surface and the rear surface are configured to be one completely integrated surface). At least one of the front surface and the rear surface of the electronic device 200 may be bent, and thus at least one side surface of the electronic device 200 between the front surface and the rear surface of the electronic device 200 may be removed. The electronic device 200 may have various stereoscopic shapes such as a ball shape having at least one surface, a cylindrical shape, or dodecahedron. Further, at least one surface included in the stereoscopic shape may include, for example, the display. According to one embodiment of the present disclosure, a user input or grip information corresponding to at least one side surface of the electronic device 200 may be acquired using the touch panel 252 or an additional sensor (for example, a pressure sensor), not the sensor pad 253 within the display 260 located in an edge portion of the electronic device 200.

By using the touch panel 252, not the sensor pad 253 within the display 260 located in the edge portion of the electronic device 200, the same function done by the sensor pad 253 may be performed.

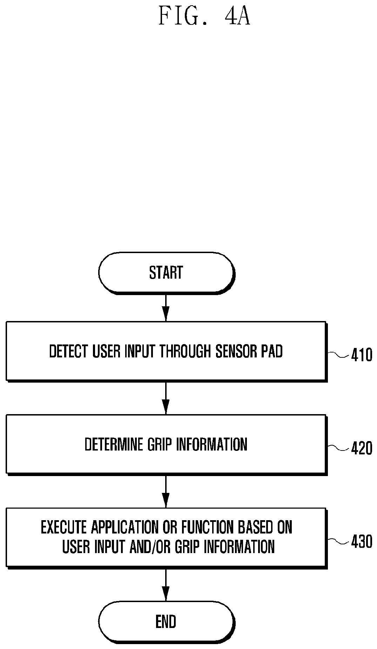

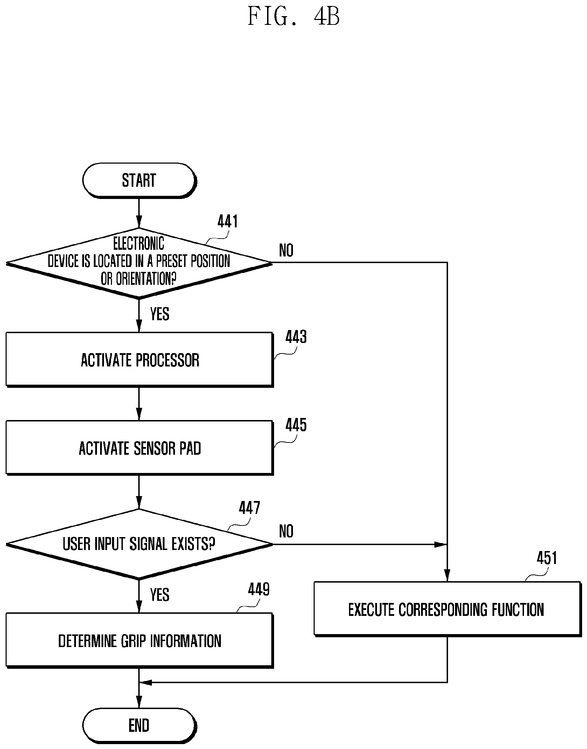

FIGs. 4A and 4B are flowcharts illustrating a method of controlling an electronic device according to an embodiment of the present disclosure.

Referring to FIG. 4A, the electronic device 200 may detect a user input signal through the one or more sensor pads 2531, 2532, 2533, 2534, 2535, and 2536 in operation 410. The one or more sensor pads 2531, 2532, 2533, 2534, 2535, and 2536 included in the electronic device 200 may transmit the detected user input signal to the processor 120 in operation 410. In operation 410, the electronic device 200 may detect the user input signal through the one or more sensor pads 2531, 2532, 2533, 2534, 2535, and 2536 included in a predetermined area of one side surface of the electronic device 200.

The electronic device 200 may determine grip information based on the detected user input signal in operation 420. The processor 120 may determine the grip information based on the detected user input signal in operation 420. The grip information corresponds to information including a grip type of the electronic device 200 by the user and may include information such as positions of fingers by which the user grips the electronic device 200 and the number of fingers by which the user grips the electronic device 200.

When the user input received through the one or more sensor pads 2531, 2532, 2533, 2534, 2535, and 2536 is larger than or equal to a predetermined reference value, the electronic device 200 may determine that the user input signal exists and generate the grip information in operation 420. For example, when a change in capacitance of the one or more sensor pads 2531, 2532, 2533, 2534, 2535, and 2536 according to the user input signal is larger than a reference capacitance change, the electronic device 200 may determine that the user input signal exists and generate the grip information in operation 420. When the change in capacitance of the one or more sensor pads 2531, 2532, 2533, 2534, 2535, and 2536 according to the user input signal is larger than the reference capacitance change, the processor 120 may determine that the user input signal exists and generate the grip information in operation 420. For example, the electronic device 200 may generate the grip information only by using, as the user input signal, the capacitance change of the one or more sensor pads 2531, 2532, 2533, 2534, 2535, and 2536 according to the user input signal which is larger than the reference capacitance change in operation 420. The processor 120 may generate the grip information only by using, as the user input signal, the capacitance change of the one or more sensor pads 2531, 2532, 2533, 2534, 2535, and 2536 according to the user input signal which is larger than the reference capacitance change in operation 420.

In another embodiment of the present disclosure, the electronic device 200 may determine the grip information based on one of the user input signal, and position information or orientation information of the electronic device 200 acquired through at least one of an acceleration sensor 240E, a gyro sensor 240B, and a geomagnetic sensor (not shown) in operation 420. For example, the electronic device 200 may determine the grip information based on one of the user input signal, and the position information or the orientation information of the electronic device 200 in operation 420. A method of determining the grip information according to the position information or the orientation information of the electronic device 200 is described below with reference to FIG. 4B.

In one embodiment of the present disclosure, in order to increase the input efficiency of the one or more sensor pads 2531, 2532, 2533, 2534, 2535, and 2536 according to the user input signal, the electronic device 200 may use a bias tracking method or a low pass filter when receiving a signal through the one or more sensor pads 2531, 2532, 2533, 2534, 2535, and 2536. For example, the bias tracking method corresponds to a method of recognizing, as a user input signal, a signal, which is larger than a threshold, when the user input signal is generated based on the assumption that reference noise is 0. By filtering a signal of a low pass band through the use of the low pass filter, the noise can be reduced and thus the user input signal can be efficiently received.

The electronic device 200 may execute an application or a function included in the electronic device 200 based on the user input signal and/or the grip information in operation 430. The execution of the application or the function included in the electronic device 200 based on the user input signal and/or the grip information will be described below.

According to an embodiment, the electronic device 200 may activate the camera module 291 based on the grip information, so as to execute a camera-related application or function in operation 430.

For example, when a user input signal is received through the one or more sensor pads 2531, 2532, 2533, 2534, 2535, and 2536 in a state where the camera function is executed, the electronic device 200 may provide one of an operation of acquiring an image through the camera module 291, a function of zooming in or out a subject through the camera module 291, a focus-related function (for example, a half shutter function), a function of selecting a camera menu, a function of switching front and rear cameras, and a function of automatically executing a designated function in operation 430.

According to an embodiment of the present disclosure, the electronic device 200 may automatically execute a timer when an image acquired through a front camera is displayed as a preview, the electronic device 200 is horizontally oriented, grip information corresponds to a designated mode (for example, a one hand mode), at least one of combinations thereof is satisfied, or an image is acquired through the camera module 291 in operation 430.

According to an embodiment of the present disclosure, the electronic device 200 may execute a function of controlling a screen rotation operation of the electronic device based on the grip information in operation 430. Even though the electronic device 200 is pre-configured to rotate the screen according to a position or orientation of the electronic device 200, the electronic device 200 may invalidate the screen rotation operation based on the grip information or prevent the screen rotation operation based on the grip information.

According to an embodiment of the present disclosure, the electronic device 200 may execute a function of changing an output of a speaker included in the electronic device 200 or muting the output based on the grip information in operation 430. Even though the electronic device 200 is pre-configured to output a telephone ring or sound through a speaker, the electronic device 200 may control a function not to make the output through the speaker based on the grip information.

According to an embodiment of the present disclosure, the electronic device 200 may switch the mode of the electronic device 200 to a sound output mode using a first speaker (e.g., the speaker 282) or a sound output mode using a second speaker (e.g., the receiver 284) based on the grip information in operation 430. Although the electronic device 200 is pre-configured to output a sound by using the second speaker (e.g., the receiver 284), the electronic device 200 may control a function to switch the mode of the electronic device 200 to the sound output mode using the first speaker (e.g., the speaker 282) based on the grip information. In contrast, although the electronic device 200 is pre-configured to output a sound by using the first speaker (e.g., the speaker 282), the electronic device 200 may control a function to switch the mode of the electronic device 200 to the sound output mode using the second speaker (e.g., the receiver 284) based on the grip information.

According to an embodiment of the present disclosure, the electronic device 200 may change progress of the reproduction of media being executed based on the user input signal in operation 430. The electronic device 200 may change the progress of the reproduction of the media being executed based on the user input signal and reflect the change in a User Interface (Ul) in a progress bar form to display the UI in operation 430. The electronic device 200 may perform operations of fast-forwarding the progress of the reproduction of the executed media by a predetermine time, rewinding the progress of the reproduction of the executed media by a predetermine time, playing faster, playing slower, and pausing, based on the user input signal in operation 430.

According to an embodiment of the present disclosure, the electronic device 200 may perform one of an operation of scrolling information displayed on the display 260, an operation of enlarging information displayed on the display 260, an operation of reducing information displayed on the display 260, and an operation of switching information displayed on the display 260 based on the user input signal in operation 430. The operation of switching the information displayed on the display 260 may refer to an operation of moving forward or backward in a web browser. The operation of switching the information displayed on the display 260 may be an operation of displaying the next screen or the previous screen in an electronic document.

According to an embodiment of the present disclosure, the electronic device 200 may provide an operation of switching an application in operation 430. The operation of switching the application may be an operation of changing an application executed in the background to an application executed in the foreground or changing an application executed in the foreground to an application executed in the background based on the user input signal. The electronic device 200 may switch between an application being executed in the background of the electronic device 200 and an application being currently executed in operation 430. For example, the electronic device 200 may change the switched application based on at least some of orientation information of the application (e.g., a basic execution orientation or an orientation of the application being executed). When the electronic device 200 is horizontally oriented, the electronic device 200 may switch an application included in a first application group corresponding to the horizontal orientation. Alternatively, when the electronic device 200 is vertically oriented, the electronic device 200 may switch an application included in a second application group corresponding to the vertical orientation.

According to an embodiment of the present disclosure, the electronic device may display a tab menu including one or more lists which can be selected by the user. In operation 430, the electronic device 200 may control the lists included in the tab menu based on the user input signal received through the one or more sensor pads 2531, 2532, 2533, 2534, 2535, and 2536. The lists included in the tab menu may be mapped with the one or more sensor pads 2531, 2532, 2533, 2534, 2535, and 2536.

According to an embodiment of the present disclosure, the electronic device 200 may display one or more selectable lists, and may select one or more lists based on at least one of the user input and the grip information in operation 430.

According to an embodiment of the present disclosure, the electronic device 200 may execute a function of controlling brightness of the display 260 based on the grip information in operation 430. Even though the electronic device 200 is pre-configured to turn on the display 260 for a predetermined time, the electronic device 200 may continuously maintain the display 260 in an on state based on the grip information while the grip information is received.

According to an embodiment of the present disclosure, the electronic device 200 may reduce an entire screen and display the reduced screen in a predetermined area of the display 260 according to the grip information or differently display a predetermined object on the display 260 according to the grip information in operation 430. For example, when the user grips the electronic device 200 with their left hand, the electronic device 200 may determine that the user grips the electronic device 200 with the left hand, and thus may reduce an entire screen and display the reduced screen in the left area of the display 260. When the user grips the electronic device 200 with the right hand, the electronic device 200 may determine that the user grips the electronic device 200 with the right hand, and thus may reduce an entire screen and display the reduced screen in the right area of the display 260. An operation of changing a position or a shape of a predetermined object and displaying the changed object on the display 260 according to grip information is described below.

When the user grips the electronic device 200 with the left hand, the electronic device 200 may determine that the user grips the electronic device 200 with the left hand, and thus may display a predetermined object (a virtual keyboard, a window, or a popup window) in the left area of the display 260. When the user grips the electronic device 200 with their right hand, the electronic device 200 may determine that the user grips the electronic device 200 with the right hand, and thus may display a predetermined object (a virtual keyboard, a window, or a popup window) in the right area of the display 260. When the grip information corresponds to the user gripping the electronic device with both hands, the electronic device 200 may split a designated object (a virtual keyboard, a window, or a popup window) and display the split objects on two sides of the display 260. The display of the split designated objects may correspond to a split keyboard type in which the virtual keyboard is split.

According to an embodiment of the present disclosure, the electronic device 200 may release a lock screen and display a screen being executed or a standby screen according to the user input signal or the user grip information received through the one or more sensor pads 2531, 2532, 2533, 2534, 2535, and 2536 in operation 430.

According to an embodiment of the present disclosure, the electronic device 200 may provide a first application through a first area of the display 260 (for example, provide an execution screen of the first application) and provide a second application through a second area of the display 260 (for example, provide an execution screen of the second application). The electronic device 200 may split the display 260 and display executions of one or more applications. The electronic device 200 may control the first application through the user input signal when a position of the user input signal corresponds to the first area, and control the second application through the user input signal when a position of the user input signal corresponds to the second area in operation 430.

According to an embodiment of the present disclosure, the electronic device 200 may control a GUI element of an application being executed based on the user input signal. The electronic device 200 may control a GUI element of a game application being executed based on the user input signal.

According to an embodiment of the present disclosure, the electronic device 200 may automatically execute an application designated to the sensor pad based on the user input signal.

According to an embodiment of the present disclosure, the electronic device 200 may designate a physical key (hard key) to the sensor pad based on the user input signal. The electronic device 200 may designate keys, strings, and holes for controlling a musical instrument to the sensor pad when a musical instrument playing application is executed, so as to play the musical instrument based on the user input signal. The electronic device 200 may designate a function corresponding to a shift key of a keyboard to the sensor pad. The electronic device 200 may automatically execute a designated application by opening a cover of the electronic device 200 based on the user input signal. The electronic device 200 may display different types of quick panels based on the user input signal. The electronic device 200 may provide an object deleting function in an application for writing or painting based on the user input signal. The electronic device 200 may provide a braille input function or a magnifying glass function based on the user input signal.

The electronic device 200 may connect a plurality of electronic devices 200 into which the same pattern is input through a direct communication scheme (for example, Bluetooth, NFC, WiFi, direct or the like) between the electronic devices 200 based on the user input signal. The same pattern input may include placing two electronic devices 200 to be close to each other and then simultaneously sliding side portions of the terminals or applying user inputs to side surfaces of the electronic devices 200 according to the same order or grip.

FIG. 4B is a flowchart illustrating an operation of determining grip information according to position information or orientation information of an electronic device according to an embodiment of the present disclosure.

Referring to FIG. 4B, the electronic device 200 may determine whether the electronic device 200 has a specified position (or posture) or orientation in operation 441. For example, the electronic device 200 may determine whether the electronic device 200 has a specified position or orientation according to position information and orientation information of the electronic device 200 acquired through at least one of the acceleration sensor 240E, the gyro sensor 240B, and the geomagnetic sensor (not shown) in operation 441.

In order to execute a camera function, the user may cause the camera module 290 located on the rear surface of the electronic device 200 to face a subject and have the display 260 face the user. Further, the user may operate the electronic device 200 in a portrait mode or a landscape mode to execute the camera function. The position information or the orientation information of the electronic device 200 may be determined through a signal acquired through at least one of the acceleration sensor 240E, the gyro sensor 240B, and the geomagnetic sensor (not shown).

A method of determining whether the position information or the orientation information of the electronic device 200 corresponds to a specified potion or orientation is described below with an example of an Euler Angle indicating movement of the electronic device 200. A pitching angle and a rolling angle of the electronic device 200 may be determined through a signal acquired through at least one of the acceleration sensor 240E, the gyro sensor 240B, and the geomagnetic sensor (not shown). When the pitching angle of the electronic device 200 is within a tolerance range angle (e.g., 90°± 10°) from the vertical line (90°) and the rolling angle of the electronic device 200 is within a tolerance range angle (e.g., 0°± 10°) from the horizontal line (0°), the electronic device 200 may determine that the electronic device 200 is located in the specified position or orientation.

When the electronic device 200 determines that the electronic device 200 is not located in the specified position or orientation or when the electronic device does not maintain the specified position or orientation for a predetermined time or longer, the electronic device 200 continuously maintain the corresponding function being currently executed in operation 451.

When the electronic device 200 determines that the electronic device 200 is located in the specified position and orientation, the electronic device 200 may activate (or enable) the processor 120 in operation 443. For example, when the electronic device 200 remains in the specified position or orientation for a predetermined time, the electronic device 200 may activate (or enable) the processor 120.

In operation 445, the electronic device 200 may activate (or enable) the one or more sensor pads 2531, 2532, 2533, 2534, 2535, and 2536. For example, the electronic device may activate the processor 120 in operation 443 and then activate the one or more sensor pads 2531, 2532, 2533, 2534, 2535, and 2536 to receive a user input. In another example, when the electronic device 200 determines that the electronic device 200 is located in the specified position or orientation, the electronic device 200 may simultaneously activate the one or more sensor pads 2531, 2532, 2533, 2534, 2535, and 2536.

When the one or more sensor pads 2531, 2532, 2533, 2534, 2535, and 2536 are activated, the electronic device 200 may determine whether there is a user input signal based on the one or more sensor pads 2531, 2532, 2533, 2534, 2535, and 2536.

When the electronic device 200 determines that there is no user input signal based on the one or more sensor pads 2531, 2532, 2533, 2534, 2535, and 2536, the electronic device 200 may continuously maintain the corresponding function being currently executed in operation 451.

When the user input signal is made through the one or more sensor pads 2531, 2532, 2533, 2534, 2535, and 2536, the electronic device 200 may determine grip information in operation 449. The processor 120 may determine the grip information based on the detected user input signal in operation 449. The grip information corresponds to information including a grip type of the electronic device 200 by the user and may include information such as positions of fingers by which the user grips the electronic device 200 and the number of fingers by which the user grips the electronic device 200.

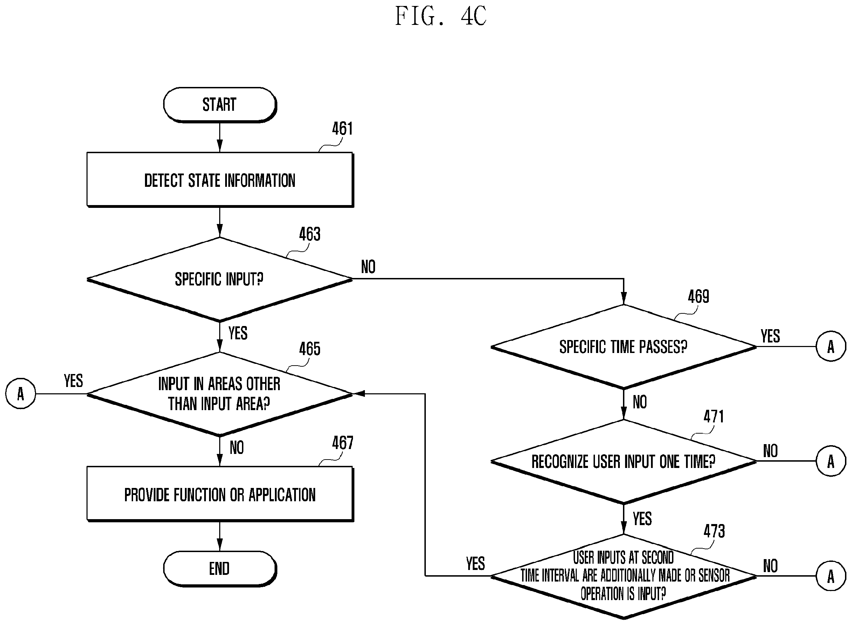

FIG. 4C is a flowchart illustrating a method of controlling an electronic device based on information or orientation information of the electronic device or a user input according to an embodiment of the present disclosure.

Referring to FIG. 4C, in operation 461, the electronic device 200 may detect state information of the electronic device 200. The state information of the electronic device 200 corresponds to information on a position (or posture) or an orientation of the electronic device 200. The electronic device 200 may detect whether the electronic device 200 has a specified position (or posture) or orientation. For example, the electronic device 200 may detect whether the electronic device 200 has a specified position or orientation according to position information and orientation information of the electronic device 200 acquired through at least one of the acceleration sensor 240E, the gyro sensor 240B, and the geomagnetic sensor (not shown) in operation 461.

When the electronic device 200 detects the state information and determines that the electronic device 200 has the specified position or orientation, the electronic device 200 may determine whether a specified input is acquired in operation 463. For example, the electronic device 200 may determine whether the specified number of user inputs have occurred within a specified time or whether successive user inputs have occurred for a specified time or longer through the sensor pad 253 located in the side surface of the electronic device 200. For example, the electronic device 200 may determine whether the specified number of user inputs (for example, two or more user inputs) have occurred through the sensor pad 253 located in the side surface of the electronic device 200 within the specified time. The electronic device 200 may determine whether an input other than the specified input has occurred in operation 465. For example, the electronic device may determine whether a user input is made in positions other than a specified input position (e.g., an input made in a specified position). The user input made in the positions other than the specified input position may be irregular multiple touches (e.g., three or more touches) on the touch panel 252 other than the sensor pad 253 or a user input due to external factors rather than a user input on the sensor pad 253. When three or more irregular multiple touches are generated on the touch panel 252 by water or cloth, a plurality of hovering actions are generated by cloth, or the same input signals are simultaneously generated on the sensor pad close to a specified input position by light (for example, three waves or LED), the electronic device 200 may prevent malfunction by not executing an application or function even though the specified user input has been entered. The electronic device 200 may determine whether the specified number of user inputs is generated at designated time intervals.

When there is no user input in positions other than the specified input position, the electronic device 200 may execute an application or a function included in the electronic device 200 in operation 467. For example, the execution of the application or function included in the electronic device 200 may be the execution of the camera function. When a user input occurs in positions other than the specified input position, the electronic device 200 does not execute an application or a function included in the electronic device 200.

When two user inputs made at a first time interval do not exist within a specified time through the sensor pad 253 located in the side surface of the electronic device 200, the electronic device 200 determines whether the specified time passes in operation 469.

When the specified time does not pass, the electronic device 200 determines whether the user input is recognized one time in operation 471. When the specified time passes, the electronic device 200 does not execute the application or function included in the electronic device 200.

When the user input is recognized one time, the electronic device 200 determines whether the user input at a second time interval is made again in operation 473. The second time interval may be equal to or smaller than the first time interval. When the user input is not recognized one time, the electronic device 200 does not execute the application or function included in the electronic device 200.

When additional inputs at the second time interval do not exist after the user input is recognized one time, but a sensor operation through the acceleration sensor is received, the electronic device 200 proceeds to operation 465.

When the user inputs at the second time interval are additionally made, the electronic device 200 proceeds to operation 465. When the user inputs at the second time interval are not additionally made (for example, when the user inputs are additionally made at a time interval smaller than or larger than the second time interval), the electronic device 200 does not execute the application or function included in the electronic device 200. In one embodiment of the present disclosure, in order to increase the input efficiency of the one or more sensor pads 2531, 2532, 2533, 2534, 2535, and 2536 according to the user input signal, the electronic device 200 may use a bias tracking method or a low pass filter when receiving a signal through the one or more sensor pads 2531, 2532, 2533, 2534, 2535, and 2536. The bias tracking method is a method of recognizing, as a user input signal, a signal that is larger than a threshold when the user input signal is generated based on the assumption that reference noise is 0. By filtering a signal of a low pass band through the use of the low pass filter, the noise can be reduced and thus the user input signal can be efficiently received.

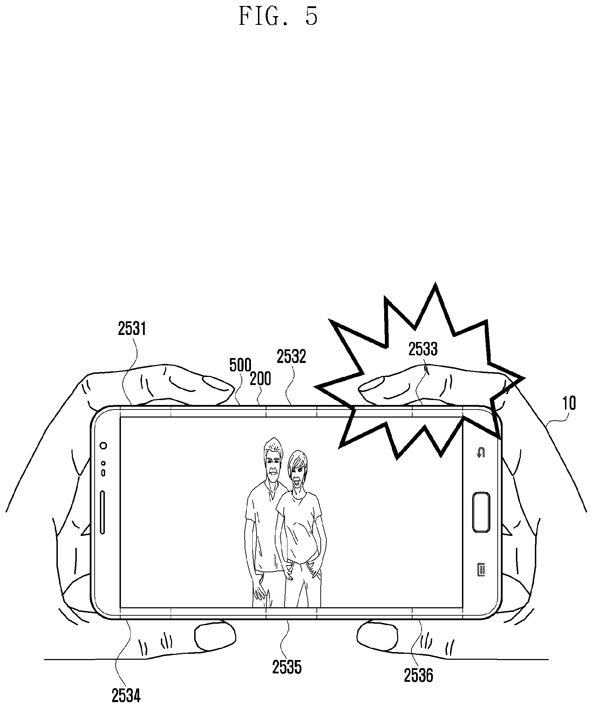

FIG. 5 illustrates a method of controlling a camera function according to various embodiments of the present disclosure.

Referring to FIG. 5, when a user 10 places the electronic device 200 in a specified position or orientation, the electronic device 200 may determine whether the electronic device 200 is located in the specified position or orientation through a signal acquired through at least one of the acceleration sensor 240E, the gyro sensor 240B, and the geomagnetic sensor (not shown). When the electronic device 200 determines that the electronic device 200 is located in the specified position or orientation, the electronic device 200 may receive a user input signal from the one or more sensor pads 2531, 2532, 2533, 2534, 2535, and 2536. The electronic device 200 may determine grip information according to the user input signal received from the one or more sensor pads 2531, 2532, 2533, 2534, 2535, and 2536, and position information or orientation information of the electronic device.

When the user 10 horizontally grips the electronic device 200 and causes the camera module 291 to face a subject 500, the electronic device 200 receives a user input signal from the one or more sensor pads 2531, 2532, 2533, 2534, 2535, and 2536. When the user 10 raises edges of the electronic device 200 by using both hands, one sensor pad receives a user input signal and another sensor pad does not receive a user input signal. The electronic device 200 determines grip information according to the user input signal received from the one or more sensor pads 2531, 2532, 2533, 2534, 2535, and 2536. Through the comparison of user input signals received through the one or more sensor pads 2531, 2532, 2533, 2534, 2535, and 2536, the grip type of the electronic device 200 by the user 10, positions of fingers of the user 10 gripping the electronic device 200, and the number of fingers gripping the electronic device 200 may be determined.

For example, when the user 10 raises the edges of the electronic device 200 using both hands, the first sensor pad 2531, the third sensor pad 2533, the fourth sensor pad 2534, and the sixth sensor pad 2536 may receive user input signals larger than or equal to a set value, and the second sensor pad 2532 and the fifth sensor pad 2535 may not receive user input signals or may receive user input signals smaller than or equal to a set value. The set value may be equal to or larger than a reference value by which the existence or nonexistence of the user inputs through one or more sensor pads 2531, 2532, 2533, 2534, 2535, and 2536 is determined. The electronic device 200 determines grip information by comparing the user input signals received through the first sensor pad 2531, the third sensor pad 2533, the fourth sensor pad 2534, and the sixth sensor pad 2536 and the user input signals received through the second sensor pad 2532 and the fifth sensor pad 2535.

The electronic device 200 may determine a state where the user 10 grips four edges of the electronic device by using both hands as the grip information. The electronic device 200 may determine the grip information based on at least one of the user input signal and position information or orientation information of the electronic device 200, and may activate the camera module 291 based on the grip information to execute a camera function. Alternatively, when a specified user input (for example, double tap, long tap, or swipe) is received by a specified sensor pad of the electronic device 200, the electronic device 200 may activate the camera module 291 to execute the camera function. When the user input signal greater than or equal to the set value is received through the one or more sensor pads 2531, 2532, 2533, 2534, 2535, and 2536 while the camera function is executed, the electronic device 200 may provide one of a function of acquiring an image through the camera module 291, a function of zooming in or out on a subject through the camera module 291, a focus-related function (for example, a half shutter function), a function of selecting a camera menu, a function of switching front and rear cameras, and a function of automatically executing a designated function.

For example, when the user input signal is received through the third sensor pad 2533 while the camera function is executed, the electronic device 200 may provide the function of acquiring the image through the camera module 291. When the user input signal is received through the first sensor pad 2531 while the camera function is executed, the electronic device 200 may provide the function of zooming in on the subject through the camera module 291. When the user input signal is received through the second sensor pad 2532 in a state where the camera function is executed, the electronic device 200 may provide the function of zooming out on the subject through the camera module 291. A method of detecting the user input signal through the one or more sensor pads 2531, 2532, 2533, 2534, 2535, and 2536 may include a method in which the user 10 contacts the side surface of the electronic device 200 close to the one or more sensor pads 2531, 2532, 2533, 2534, 2535, and 2536,as well as a method in which the user 10 releases the grip state. For example, when the user 10 releases contact (or touch) from the third sensor pad 2533 while the user 10 grips the electronic device 200 and then contacts (or touches) again the third sensor pad 2533 as illustrated in FIG. 5, the electronic device 200 may provide the function of acquiring the image through the camera module 291. In another example, when the user 10 releases contact (or touch) from the third sensor pad 2533 while the user 10 grips the electronic device 200 as illustrated in FIG. 5, the electronic device 200 may determine the release of the contact (or touch) as the user input signal and provide the function of acquiring the image through the camera module 291.

The method of detecting the user input signal through the one or more sensor pads 2531, 2532, 2533, 2534, 2535, and 2536 may continuously maintain the function which is executed when the user 10 maintains contact with the side surface of the electronic device 200 close to the one or more sensor pads 2531, 2532, 2533, 2534, 2535, and 2536 for a predetermined time or longer (for example, long press). For example, when the user 10 maintains contact with the first sensor pad 2531 for a predetermined time or longer (e.g., long press), the electronic device 200 may maximally zoom in on the subject. When the user 10 keeps the contact with the second sensor pad 2532 for a predetermined time or longer (e.g., long press), the electronic device 200 may maximally zoom out on the subject.

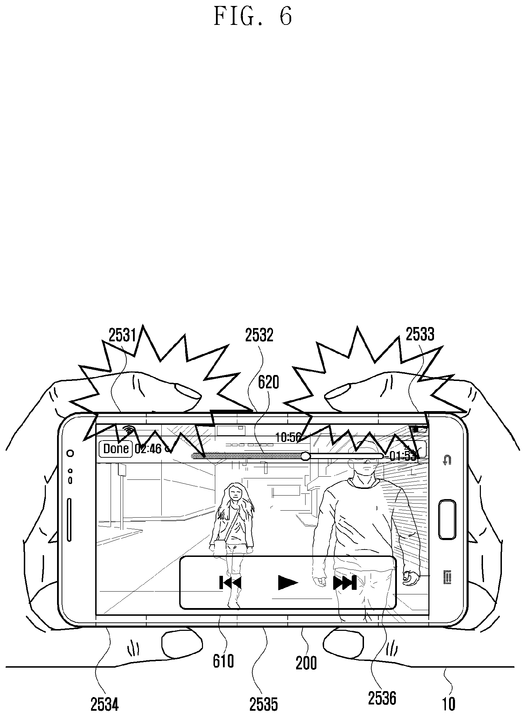

FIG. 6 illustrates a method of controlling a media function according to various embodiments of the present disclosure.

Referring to FIG. 6, the electronic device 200 may determine grip information according to the user input corresponding to at least one side surface portion of the electronic device 200 (e.g., a user input received through the one or more sensor pads 2531, 2532, 2533, 2534, 2535, and 2536). The electronic device 200 may determine grip information according to the user input signal received from the one or more sensor pads 2531, 2532, 2533, 2534, 2535, and 2536. Through the comparison of the user input signals received through the one or more sensor pads 2531, 2532, 2533, 2534, 2535, and 2536, the grip type of the electronic device 200 by the user 10, positions of fingers of the user 10 gripping the electronic device 200, and the number of fingers gripping the electronic device 200 may be determined.

For example, when the user 10 raises the edges of the electronic device 200 by using both hands, the first sensor pad 2531, the third sensor pad 2533, the fourth sensor pad 2534, and the sixth sensor pad 2536 may receive user input signals greater than or equal to a set value, and the second sensor pad 2532 and the fifth sensor pad 2535 may not receive user input signals or may receive user input signals smaller than or equal to a set value. The set value may be equal to or larger than a reference value by which the existence or nonexistence of the user inputs through one or more sensor pads 2531, 2532, 2533, 2534, 2535, and 2536 is determined. The electronic device 200 determines grip information by comparing the user input signals received through the first sensor pad 2531, the third sensor pad 2533, the fourth sensor pad 2534, and the sixth sensor pad 2536 and the user input signals received through the second sensor pad 2532 and the fifth sensor pad 2535. The electronic device 200 may determine a state where the user 10 grips four edges of the electronic device by using both hands as the grip information. In other words, the electronic device 200 may determine the grip information based on the user input signal and may execute a function of controlling media 610 provided based on the grip information. For example, when the user input signal is received through the one or more sensor pads 2531, 2532, 2533, 2534, 2535, and 2536, the electronic device 200 may change progress of the reproduction of the executed media 610, and reflect the change in a User Interface (Ul) 620 in a progress bar form to display the Ul. The electronic device 200 may perform operations of fast-forwarding the progress of the reproduction of the executed media 620 by a predetermine time, rewinding the progress of the reproduction of the executed media 620 by a predetermine time, playing faster, playing slower, and pausing, based on the user input signal

For example, when the user input signal is received through the third sensor pad 2533, the electronic device 100 may control the progress of the reproduction of the executed media 620 to "go forward" by a predetermined time or control a speed of the progress of the reproduction of the executed media 620 to be quicker. When the user input signal is received through the first sensor pad 2531, the electronic device 100 may control the progress of the reproduction of the executed media 620 to "go backward" by a predetermined time or control a speed of the progress of the reproduction of the executed media 620 to be slower.

A method of receiving the user input signal through the one or more sensor pads 2531, 2532, 2533, 2534, 2535, and 2536 may include a method in which the user 10 contacts the side surface of the electronic device 200 close to the one or more sensor pads 2531, 2532, 2533, 2534, 2535, and 2536,as well as a method in which the user 10 releases the grip state. For example, when the user 10 releases a contact (or touch) from the third sensor pad 2533 while the user 10 grips the electronic device 200 and then contacts (or touches) the third sensor pad 2533 again as illustrated in FIG. 6, the electronic device 200 may control the progress of the reproduction of the executed media 620 to "go forward" by a predetermined time or control the progress of the reproduction of the executed media 620 to be quicker.

In another example, when the user 10 releases a contact (or touch) from the third sensor pad 2533 while the user 10 grips the electronic device 200 as illustrated in FIG. 6, the electronic device 200 may determine the release of the contact (or touch) from the electronic device 200 as the user input signal and control the progress of the reproduction of the executed media 620 to "go forward" by a predetermined time or control the progress of the reproduction of the executed media 620 to be quicker.

The method of detecting the user input signal through the one or more sensor pads 2531, 2532, 2533, 2534, 2535, and 2536 may continuously maintain the function which is executed when the user 10 maintains contact with the side surface of the electronic device 200 close to the one or more sensor pads 2531, 2532, 2533, 2534, 2535, and 2536 for a predetermined time or longer (e.g., long press). For example, when the user 10 maintains contact with the third sensor pad 2533 for a predetermined time or longer (e.g., long press), the electronic device 200 may maintain the "fast-forward" function.

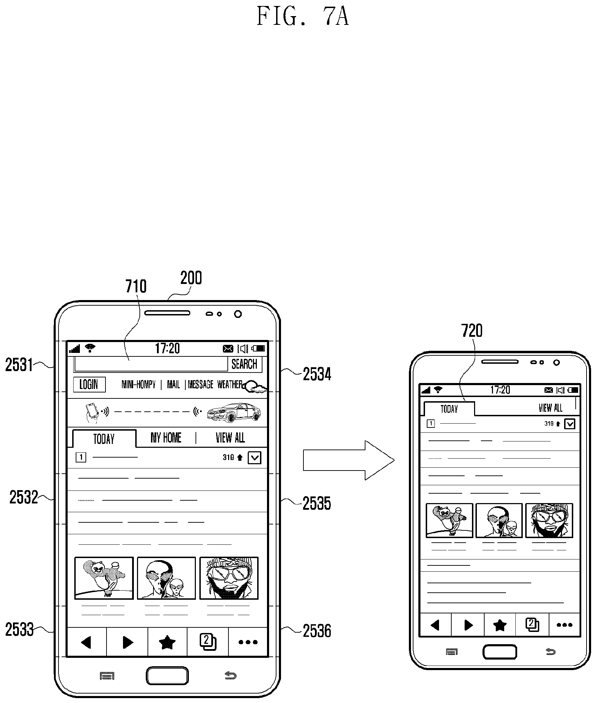

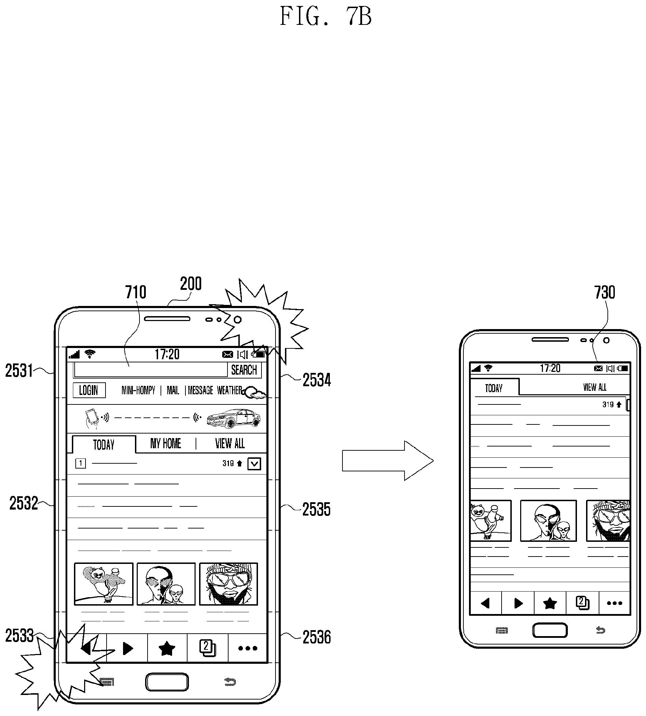

FIGS. 7A and 7B illustrate a method of controlling information displayed on a display of an electronic device according to an embodiment of the present disclosure.

Referring to FIG. 7A, the electronic device 200 may determine grip information according to the user input signal received from the one or more sensor pads 2531, 2532, 2533, 2534, 2535, and 2536.For example, when the user input signal is received through the one or more sensor pads 2531, 2532, 2533, 2534, 2535, and 2536, the electronic device 200 may provide a function 720 of scrolling the information 710 displayed on the display 260 based on the user input signal.

When the user sequentially contacts (or touches) the first sensor pad 2531, the second sensor pad 2532, and the third sensor pad 2533, the electronic device 200 may provide a function 720 of downwardly scrolling the information 710 displayed on the display 260 based on the received user input signal. When the user sequentially contacts (or touches) the third sensor pad 2533, the second sensor pad 2532, and the first sensor pad 2531, the electronic device 200 may provide a function 720 of upwardly scrolling the information 710 displayed on the display 260 based on the received user input signal. In another example, when the user slides one portion of the edge of the electronic device 200, the electronic device 200 provides a function 720 of scrolling the information 710 displayed on the display 260 based on the received user input signal.

Referring to FIG. 7B, the electronic device 200 may determine grip information according to the user input signal received from the one or more sensor pads 2531, 2532, 2533, 2534, 2535, and 2536.

For example, when the user input signal is received through the one or more sensor pads 2531, 2532, 2533, 2534, 2535, and 2536, the electronic device 200 may provide a function 730 of enlarging or reducing the information 710 displayed on the display 260 based on the user input signal.

When the user simultaneously contacts (or touches) the third sensor pad 2533 and the fourth sensor pad 2534, the electronic device 200 may provide a function 730 of enlarging or reducing the information 710 displayed on the display 260 based on the received user input signal. When the user touches one portion of the edge of the electronic device 200, the electronic device 200 may provide a function 730 of enlarging or reducing the information 710 displayed on the display 260 based on the received user input signal.

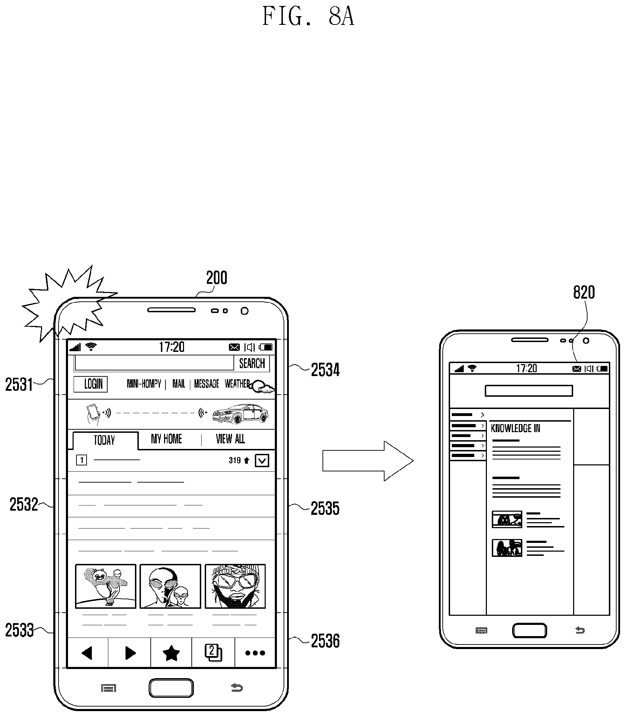

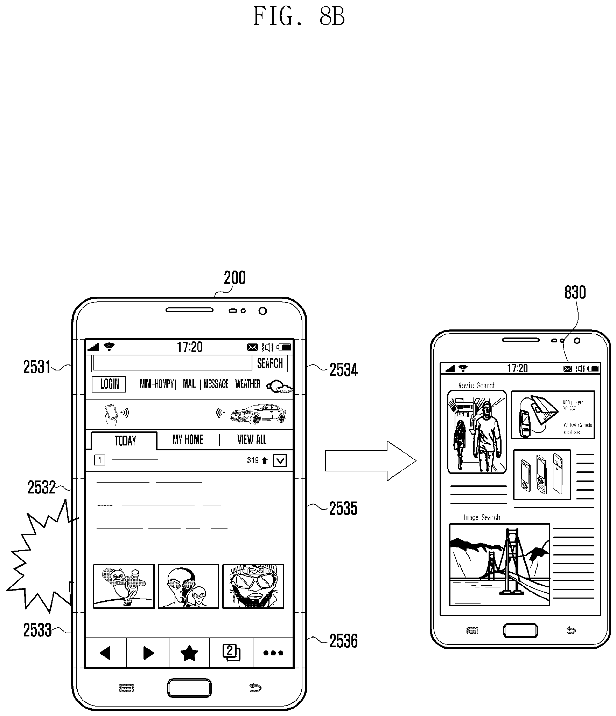

FIGS. 8A and 8B illustrate a method of controlling information displayed on a display of an electronic device according to an embodiment of the present disclosure.

Referring to FIG. 8A, the electronic device 200 may determine grip information according to the user input signal received from the one or more sensor pads 2531, 2532, 2533, 2534, 2535, and 2536.For example, when the user input signal is received through the one or more sensor pads 2531, 2532, 2533, 2534, 2535, and 2536, the electronic device 200 may provide a function of switching information 810 displayed on the display 260 based on the user input signal.

When the user contacts (touches) the first sensor pad 2531, the electronic device 200 may provide information 820 to be displayed after the information 810 currently displayed on the display 260 based on the received user input signal. In another example, when the user slides one portion of the edge of the electronic device 200, the electronic device 200 provides a function 820 of displaying the information 820 to be displayed after the information 810 currently displayed on the display 260 based on the received user input signal.

Referring to FIG. 8B, the electronic device 200 may determine grip information according to the user input signal received from the one or more sensor pads 2531, 2532, 2533, 2534, 2535, and 2536.For example, when the user input signal is received through the one or more sensor pads 2531, 2532, 2533, 2534, 2535, and 2536, the electronic device 200 may provide a function of switching information 810 displayed on the display 260 based on the user input signal.

When the user contacts (touches) the second sensor pad 2532, the electronic device 200 may provide information 830 displayed before the information 810 currently displayed on the display 260 based on the received user input signal. In another example, when the user slides one portion of the edge of the electronic device 200, the electronic device 200 provides a function 830 of displaying the information 820 displayed before the information 810 currently displayed on the display 260 based on the received user input signal.

The function of switching the information displayed on the display 260 may be mapped with a forward or backward operation in a web browser. In another example, the function of switching the information displayed on the display 260 may be mapped with an operation of displaying the next screen or the previous screen in an electronic document.

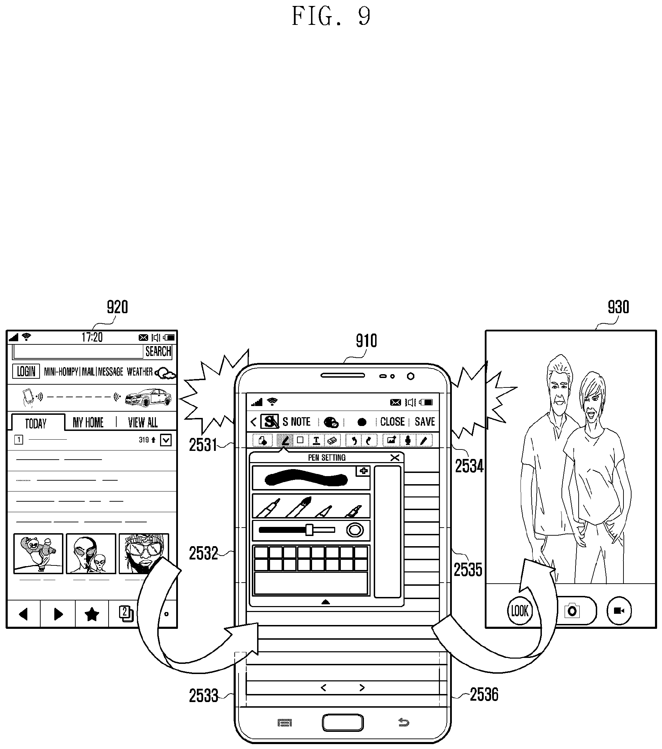

FIG. 9 illustrates a method of controlling an application according to various embodiments of the present disclosure.

Referring to FIG. 9, the electronic device 200 may determine grip information according to the user input signal received from the one or more sensor pads 2531, 2532, 2533, 2534, 2535, and 2536.For example, when the user input signal is received through the one or more sensor pads 2531, 2532, 2533, 2534, 2535, and 2536, the electronic device 200 may provide an operation of changing an application being provided in the background to be executed in the foreground or changing an application being executed in the foreground to be executed in the background based on the received user input signal.

For example, when the user contacts (touches) the first sensor pad 2531, the electronic device 200 may provide a second application 920 being executed in the background to the foreground instead of a first application 910 being currently provided in the foreground based on the received user input signal. When the user contacts (touches) the fourth sensor pad 2534, the electronic device 200 may provide a third application 930 provided in the background to the foreground instead of the first application 910 being currently provided in foreground.

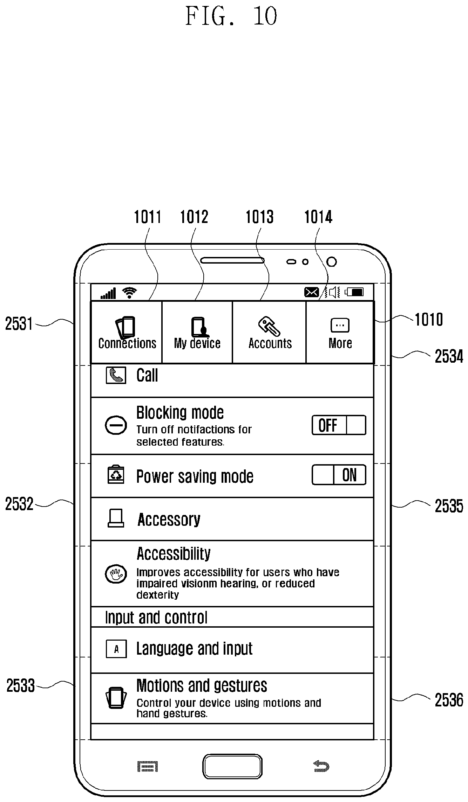

FIG. 10 illustrates a method of controlling a tab menu according to an embodiment of the present disclosure.

Referring to FIG. 10, the electronic device 200 may determine grip information according to the user input signal received from the one or more sensor pads 2531, 2532, 2533, 2534, 2535, and 2536.

The electronic device 200 may display a tab menu 1010 including one or more lists 1011, 1012, 1013, and 1014 which can be selected by the user. For example, the one or more lists 1011, 1012, 1013, and 1014 included in the tab menu 1010 may correspond to a call connection 1011, device management 1012, account configuration 1013, or another tab menu list view 1014, but the present disclosure is not limited thereto. The one or more lists 1011, 1012, 1013, and 1014 included in the tab menu 1010 may be changed according to a user setting.

The lists included in the tab menu may be mapped with the one or more sensor pads 2531, 2532, 2533, 2534, 2535, and 2536. The electronic device 200 may control the lists included in the tab menu based on the user input signals received through the one or more sensor pads 2531, 2532, 2533, 2534, 2535, and 2536.

For example, when the user contacts (touches) the first sensor pad 2531, the electronic device 200 may control the call connection 1011 which is the tab menu mapped to the first sensor pad 2531 based on the received user input signal. When the user contacts (touches) the second sensor pad 2532, the electronic device 200 may control the device management 1012 which is the tab menu mapped to the second sensor pad 2532 based on the received user input signal. When the user contacts (touches) the third sensor pad 2533, the electronic device 200 may control the account configuration 1013 which is the tab menu mapped to the third sensor pad 2533 based on the received user input signal. When the user contacts (touches) the fourth sensor pad 2534, the electronic device 200 may control another tap menu list view 1014 which is the tab menu mapped to the fourth sensor pad 2534 based on the received user input signal.

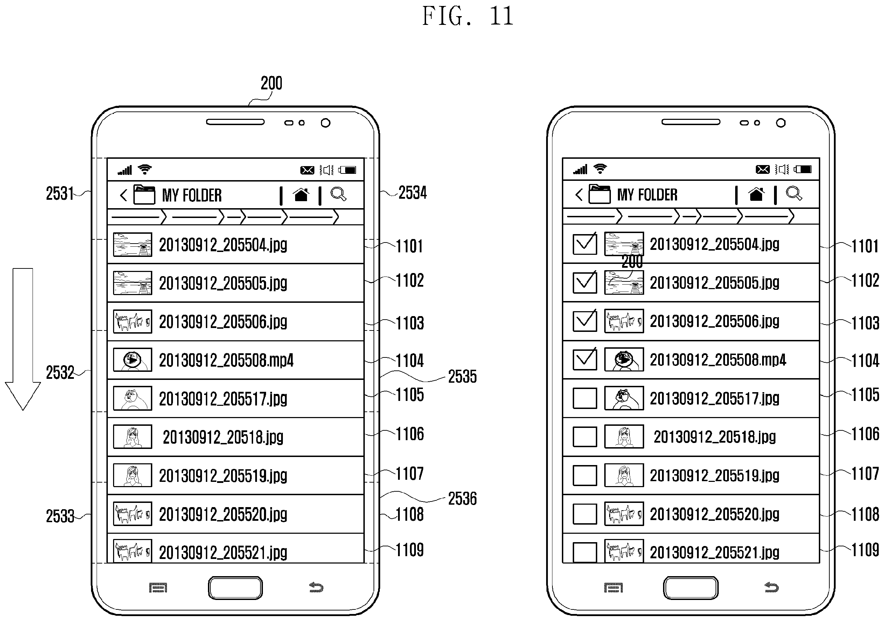

FIG. 11 illustrates a method of controlling selection lists according to an embodiment of the present disclosure.

Referring to FIG. 11, the electronic device 200 may determine grip information according to the user input signal received from the one or more sensor pads 2531, 2532, 2533, 2534, 2535, and 2536.

The electronic device 200 may display one or more selectable lists 1101, 1102, 1103, 1104, 1105, 1106, 1107, 1108, and 1109. When the user input signal is received through the one or more sensor pads 2531, 2532, 2533, 2534, 2535, and 2536, the electronic device 100 may provide a function of selecting one or more lists 1101, 1102, 1103, and 1104 from the selectable lists 1101, 1102, 1103, 1104, 1105, 1106, 1107, 1108, and 1109 based on the user input signal.

For example, when the user sequentially contacts (or touches) the first sensor pad 2531, the second sensor pad 2532, and the third sensor pad 2533, the electronic device 200 may provide a function of selecting the one or more lists 1101, 1102, 1103, and 1104 from the selectable lists 1101, 1102, 1103, 1104, 1105, 1106, 1107, 1108, and 1109 based on the received user input signal. In another example, when the user slides an edge portion of the electronic device 200, the electronic device 200 may provide the function of selecting the one or more lists 1101, 1102, 1103, and 1104 from the selectable lists 1101, 1102, 1103, 1104, 1105, 1106, 1107, 1108, and 1109 based on the received user input signal.

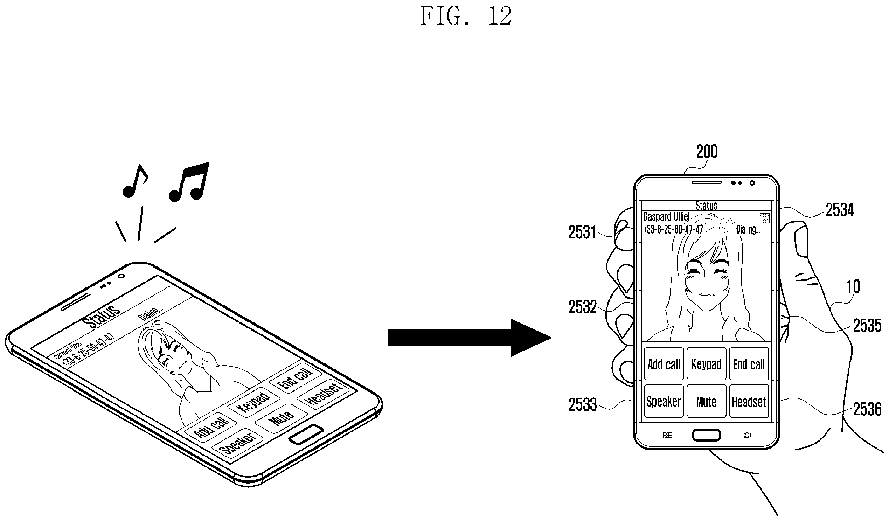

FIG. 12 illustrates a method of controlling an output volume of an electronic device according to an embodiment of the present disclosure.

Referring to FIG. 12, the electronic device 200 may determine grip information according to the user input signal received from the one or more sensor pads 2531, 2532, 2533, 2534, 2535, and 2536.

The electronic device 200 may execute a function of changing an output volume of a speaker or making the output volume mute. Even though the electronic device 200 is pre-configured to output a telephone ring or sound through a speaker, the electronic device 200 may control a function not to make the output through the speaker based on the grip information.

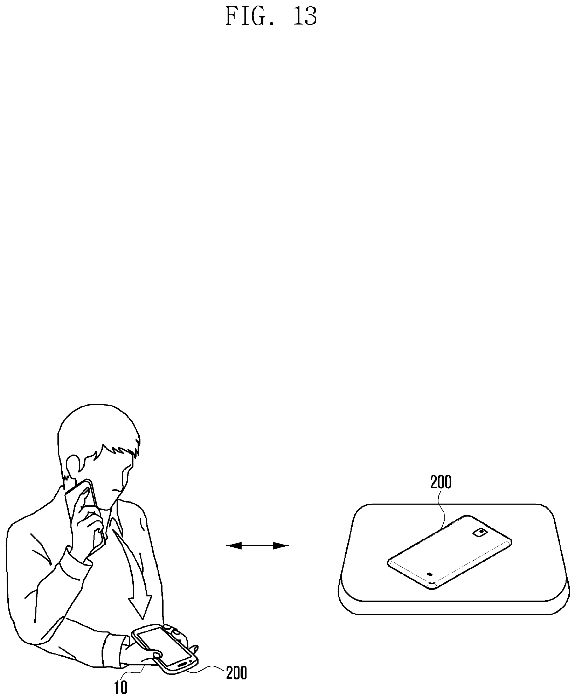

FIG. 13 illustrates a method of controlling a sound output device of an electronic device according to an embodiment of the present disclosure.

Referring to FIG. 13, the electronic device 200 may determine grip information according to the user input signal received from the one or more sensor pads 2531, 2532, 2533, 2534, 2535, and 2536.

The electronic device 200 may switch the mode of the electronic device 200 to a sound output mode using a first speaker (e.g., the speaker 282) or a sound output mode using a second speaker (e.g., the receiver 284) based on the grip information. Even though the electronic device 200 is pre-configured to output a sound by using the second speaker (e.g., the receiver 284), the electronic device 200 may control a function to switch the mode of the electronic device 200 to the sound output mode using the first speaker (e.g., the speaker 282) based on the grip information. In contrast, even though the electronic device 200 is pre-configured to output a sound by using the first speaker (for example, the speaker 282), the electronic device 200 may control a function to switch the mode of the electronic device 200 to the sound output mode using the second speaker (for example, the receiver 284) based on the grip information.

For example, if the user 10 raises the electronic device 200 to receive a call, even though the electronic device 200 is pre-configured to output a sound by using the second speaker (for example, the receiver 284), the electronic device 200 may control a function to switch the mode of the electronic device 200 to the sound output mode using the first speaker (for example, the speaker 282) based on the grip information.

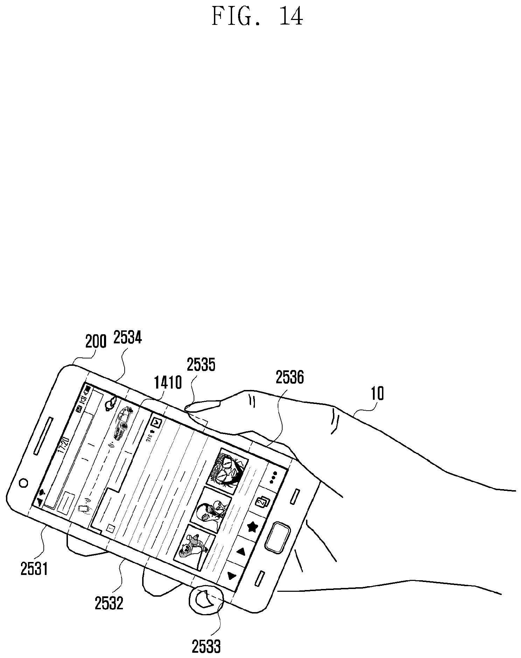

FIG. 14 illustrates a method of controlling a screen output of an electronic device according to an embodiment of the present disclosure.

Referring to FIG. 14, the electronic device 200 may determine grip information according to the user input signal received from the one or more sensor pads 2531, 2532, 2533, 2534, 2535, and 2536.

The electronic device 200 may execute a function of controlling an operation of rotating a screen output 1510 based on the grip information. Even though the electronic device 200 is pre-configured to rotate the screen output 1510 according to a position or orientation of the electronic device 200, the electronic device 200 may invalidate the operation of rotating the screen output 1510 based on the grip information or prevent the screen rotation operation based on the grip information.

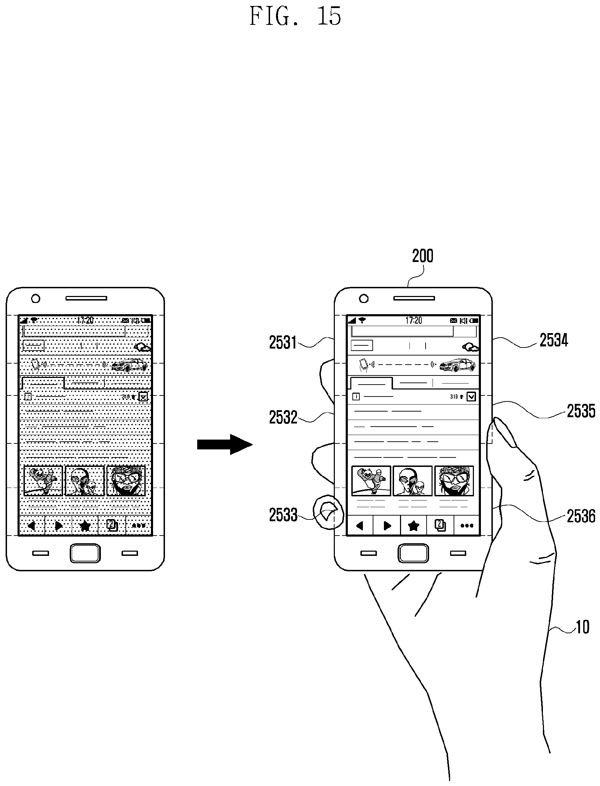

FIG. 15 illustrates a method of controlling illumination of a display of an electronic device according to an embodiment of the present disclosure.

Referring to FIG. 15, the electronic device 200 may determine grip information according to the user input signal received from the one or more sensor pads 2531, 2532, 2533, 2534, 2535, and 2536.

The electronic device 200 may execute a function of controlling illumination (for example, brightness) of the display 260 based on the grip information. Even though the electronic device 200 is pre-configured to turn on the display 260 for a predetermined time, the electronic device 200 may make a control to continuously maintain the display 260 in an on state while the grip information is received based on the grip information. For example, the electronic device 200 may execute a function of maintaining the illumination (for example, brightness) of the display 260 based on the grip information. The electronic device 200 may execute a function of controlling dimming of the display 260 based on the grip information. The electronic device 200 may execute a function of controlling a lighting output time of the display 260 based on the grip information.

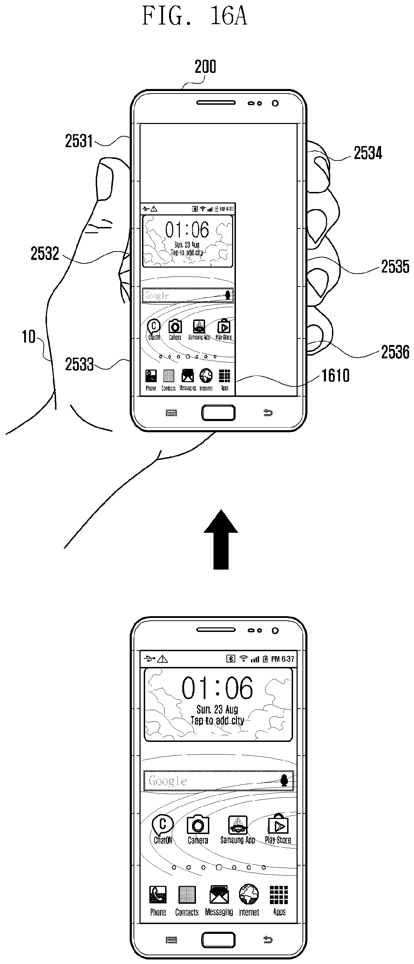

FIGS. 16A to 16E illustrate a method of controlling a display area of an electronic device according to an embodiment of the present disclosure.

Referring to FIGS. 16A-16E, the electronic device 200 may determine grip information according to the user input signal received from the one or more sensor pads 2531, 2532, 2533, 2534, 2535, and 2536.

The electronic device 200 may reduce the entire screen and display the reduced screen in a predetermined area of the display 260 according to the grip information as indicated by a reference numeral 1610, or change a position or a form of a predetermined object and display the changed object on the display 260 according to the grip information as indicated by a reference numeral 1620. An operation of reducing the entire screen and displaying the reduced screen in the predetermined area of the display 260 according to the grip information as indicated by the reference numeral 1610 may include an operation of reducing the entire screen and displaying the reduced screen in an area on the left side of the display 260 when it is determined that the user grips the electronic device 200 with their left hand based on the grip information. The operation of reducing the entire screen and displaying the reduced screen in the predetermined area of the display 260 according to the grip information may include an operation of reducing the entire screen and displaying the reduced screen in an area on the right side of the display 260 when it is determined that the user grips the electronic device 200 with their right hand based on the grip information.

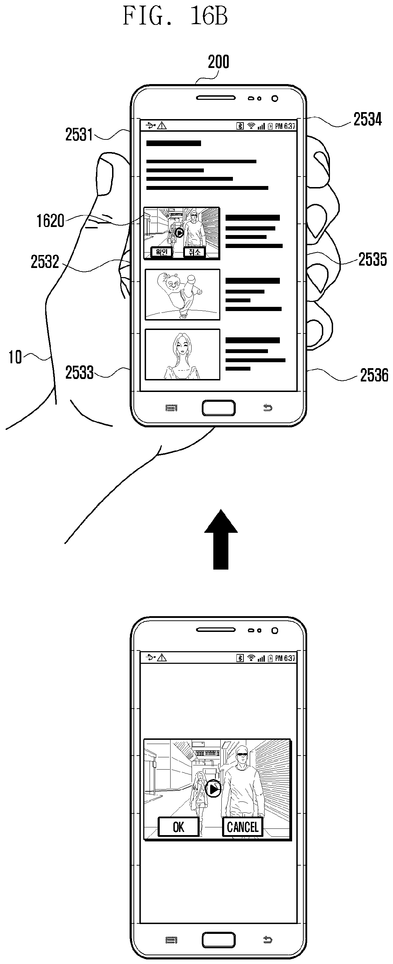

In FIG. 16B, the operation of changing the position or the form of the predetermined object and displaying the changed object on the display 260 according to the grip information may include an operation of displaying the predetermined object (e.g., a window or a popup window 1620) in an area on the left side of the display 260 when it is determined that the user grips the electronic device 200 with their left hand based on the grip information. An operation of displaying a predetermined object area on the display 260 according to the grip information may include an operation of displaying the predetermined object (for example, the window or the popup window 1620) in an area on the right side of the display 260 when it is determined that the user grips the electronic device 200 with their right hand based on the grip information. For example, the operation of reducing the entire screen and displaying the reduced screen in the predetermined area of the display 260 according to the grip information may include an operation of reducing the entire screen and displaying the reduced screen in the area on the right side of the display 260 when it is determined that the user grips the electronic device 200 with their right hand based on the grip information.

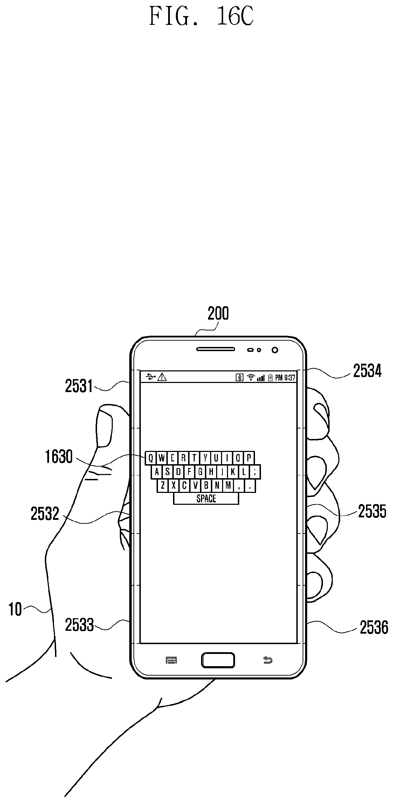

In FIG. 16C, the operation of changing the position or the form of the predetermined object and displaying the changed object on the display 260 according to the grip information may include an operation of displaying a predetermined object (e.g., a virtual keyboard 1630) in an area on the left side of the display 260 when it is determined that the user grips the electronic device 200 with their left hand based on the grip information.

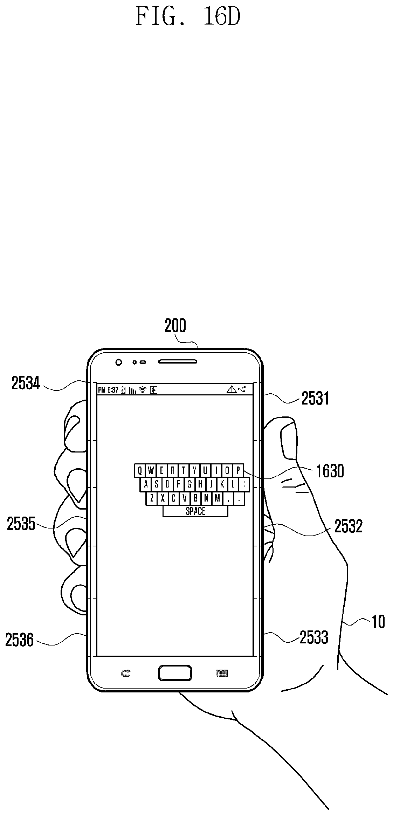

In FIG. 16D, the operation of changing the position or the form of the predetermined object and displaying the changed object on the display 260 according to the grip information may include an operation of displaying a predetermined object (for example, the virtual keyboard 1630) in an area on the right side of the display 260 when it is determined that the user grips the electronic device 200 with their right hand based on the grip information. A predetermined object (virtual keyboard, window, or popup window) may be displayed in the area on the right side of the display 260.

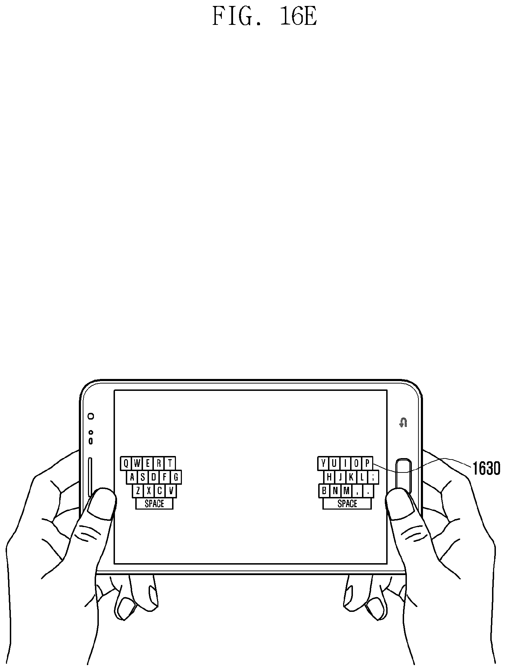

In FIG. 16E, when the grip information corresponds to the electronic device 200 being gripped with both of the user's hands, the electronic device 200 may split a designated object (for example, the virtual keyboard, the window, or the popup window) and display the split objects in two sides of the display 260. The display of the split designated objects may correspond to a split keyboard type in which the virtual keyboard is split.

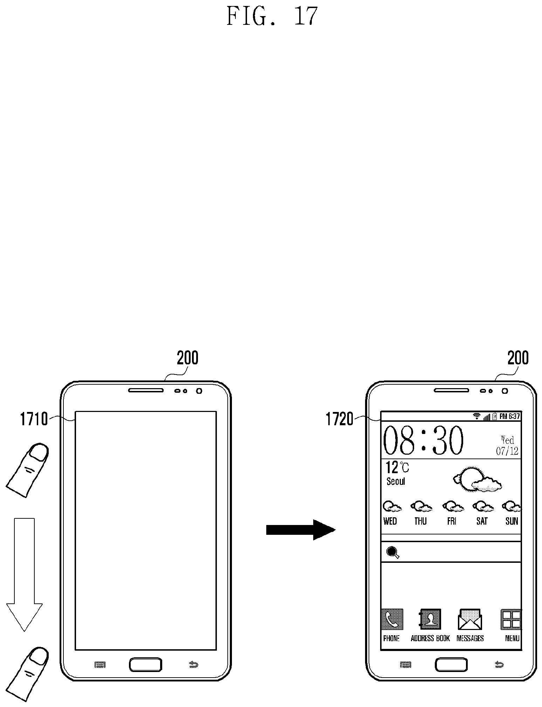

FIG. 17 illustrates a method of controlling a lock screen of an electronic device according to an embodiment of the present disclosure.

Referring to FIG. 17, the electronic device 200 may determine grip information according to the user input signal received from the one or more sensor pads 2531, 2532, 2533, 2534, 2535, and 2536.

When the user input signal is received through the one or more sensor pads 2531, 2532, 2533, 2534, 2535, and 2536, the electronic device 200 may release a lock screen 1710 and display a screen being executed or a standby screen 1720 according to the user input signal. The electronic device 200 may release the lock screen 1710 and display the screen being executed or the standby screen 1720 only when user input signals continuously or discontinuously received through the one or more sensor pads 2531, 2532, 2533, 2534, 2535, and 2536 are recognized as a pattern and the pattern matches a predetermined pattern.

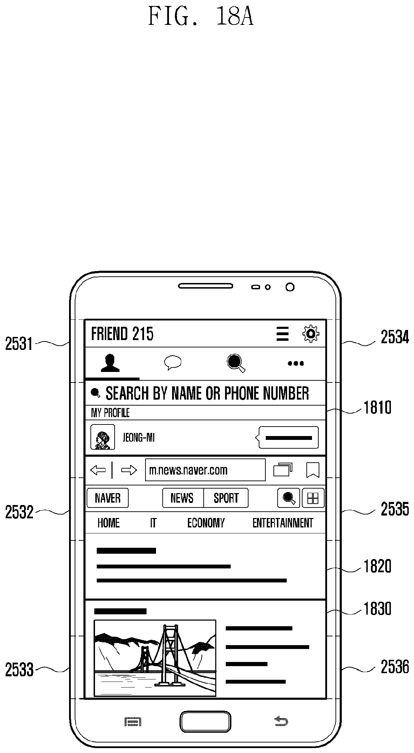

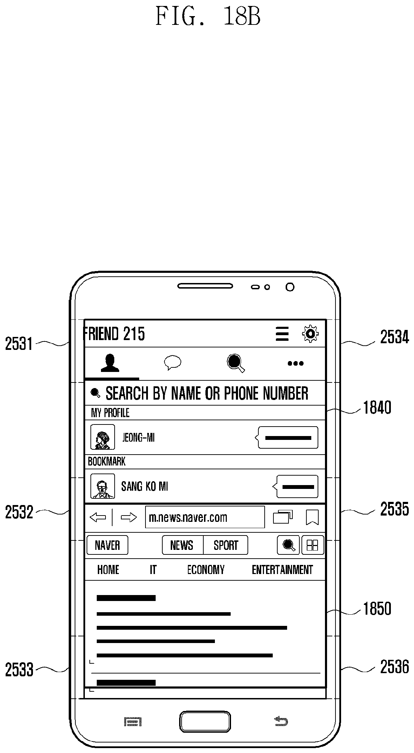

FIGS. 18A and 18B illustrate a method of controlling a display area of an electronic device according to an embodiment of the present disclosure.

Referring to FIGS. 18A and 18B, the electronic device 200 may determine grip information according to the user input signal received from the one or more sensor pads 2531, 2532, 2533, 2534, 2535, and 2536.

In FIG. 18A, the electronic device 200 may provide a display area to a first area 1810 of the display 260 based on the grip information, and may provide a second area 1820 and a third area 1830 of the display 260 as the display area. The electronic device 200 may split the display 260 and display one or more pieces of information based on the grip information. When a position of the user input signal corresponds to the first area 1810, the electronic device 200 may control a function of the first area 1810 through the user input signal. For example, when the user input signal is received through the first sensor pad 2531 or the fourth sensor pad 2534 which can control the first area 1810, the electronic device 200 may control the function of the first area 1810. When a position of the user input signal corresponds to the second area 1820, the electronic device 200 may control a function of the second area 1820 through the user input signal. For example, when the user input signal is received through the second sensor pad 2532 or the fifth sensor pad 2535 which can control the second area 1820, the electronic device 200 may control the function of the second area 1820. When a position of the user input signal corresponds to the third area 1830, the electronic device 200 may control a function of the third area 1830 through the user input signal. For example, when the user input signal is received through the third sensor pad 2533 or the sixth sensor pad 2536 which can control the third area 1830, the electronic device 200 may control the function of the third area 1830.

In FIG. 18B, when a position of the user input signal corresponds to the fourth area 1840, the electronic device 200 may control a function of the fourth area 1840 through the user input signal. For example, when the user input signal is received through the first sensor pad 2531 or the fourth sensor pad 2534 which can control the fourth area 1840, the electronic device 200 may control the function of the fourth area 1840. When a position of the user input signal corresponds to the fifth area 1850, the electronic device 200 may control a function of the fifth area 1850 through the user input signal. For example, when the user input signal is received through the third sensor pad 2533 or the sixth sensor pad 2536 which can control the fifth area 1850, the electronic device 200 may control the function of the fifth area 18 50.

As described above, the electronic device 200 provides two or three display areas corresponding to the sensor pads of the display 260 as horizontally split display areas based on the grip information. The control of the display areas through the use of the sensor pads is only an example, and does not limit the technical idea of the present disclosure. For example, the electronic device 200 may horizontally or vertically split the display area into three or more display area and provide the split display areas, and may control the display area by using the sensor pads.

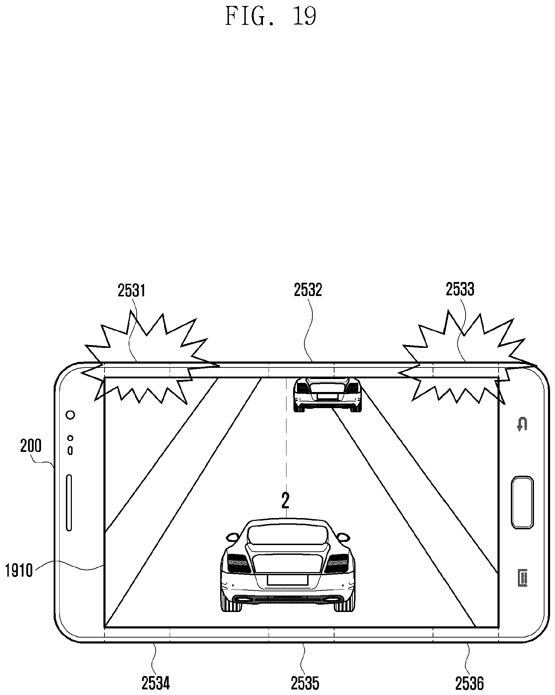

FIG. 19 illustrates a method of controlling an application according to an embodiment of the present disclosure.

Referring to FIG. 19, the electronic device 200 may determine grip information according to the user input signal received from the one or more sensor pads 2531, 2532, 2533, 2534, 2535, and 2536.

The electronic device 200 may control a GUI element of an application being executed based on the user input signal. The electronic device 200 may control a GUI element 1910 of the application being executed based on the user input signal. At this time, the application may be a game and the GUI element 1910 may be a character displayed in the game.

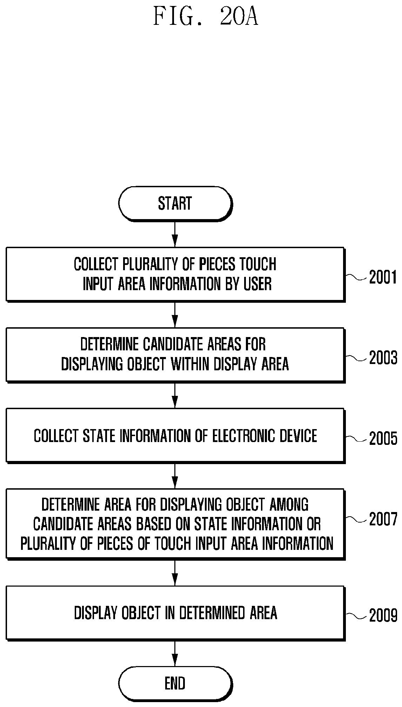

FIGS. 20A to 20C are flowcharts illustrating a method of providing functions of an electronic device according to an embodiment of the present disclosure.

Referring to FIGS. 20A-20C, the electronic device 200 may determine whether the electronic device 200 is located in a specified position or orientation through a signal acquired through at least one of the acceleration sensor 240E, the gyro sensor 240B, and the geomagnetic sensor (not shown). For example, the electronic device 200 may have the form in which an integrally configured display 260 wraps around the electronic device 200. The electronic device 200 may include the touch panel 252 which can receive a user input in left and right side surfaces.

Referring to FIG. 20A, the electronic device 200 may collect information on a plurality of touch input areas by the user from one side of the electronic device 200 in operation 2001. When the user grips the electronic device 200, the corresponding area may be a contact surface between the side surface of the electronic device 200 and a finger (part of the hand) according to a grip state.

The electronic device 200 determines a candidate area for displaying an object within the display area of the display 260 based on a plurality of collected side surface touch area information in operation 2003. For example, some areas of the display 260 near the contact area with the side surface of the electronic device 200 and the finger may be configured as candidate areas for displaying particular objects. When one contact area is detected on the right side surface of the electronic device 200 and three contact areas are detected on the left side surface, one area of the display 260 near the right contact area and three areas of the display 260 near the left contact area may be determined as candidate areas for displaying objects.

In operation 2005, the electronic device 200 may collect state information of the electronic device 200. For example, the state information of the electronic device 200 may include application information displayed on the screen, position (or posture) or orientation information (e.g., landscape mode, portrait mode or movement) of the electronic device 200 which can be recognized through the acceleration sensor 240E, the gyro sensor 240B, or the geomagnetic sensor (not shown), or state information on the grip of the electronic device 200 which can be recognized through the grip sensor 240F.

In operation 2007, the electronic device 200 determines an area for displaying an object among the candidate areas determined based on the plurality of pieces of collected touch input information by the user or the state information of the electronic device 200. For example, when the electronic device 200 remains in the portrait mode, a camera application is displayed on the screen, and the thumb is determined to be positioned on the right side contact area based on a plurality of pieces of side surface touch area information, the electronic device 200 may determine one or more candidate areas related to the display 260 near the right side contact area among the determined candidate areas as areas for displaying a photography function button. As described above, the electronic device 200 may determine an optimal object display position by using the state information of the electronic device 200 and the side surface contact area information.

The electronic device 200 may display an object in the determined area in operation 2009.

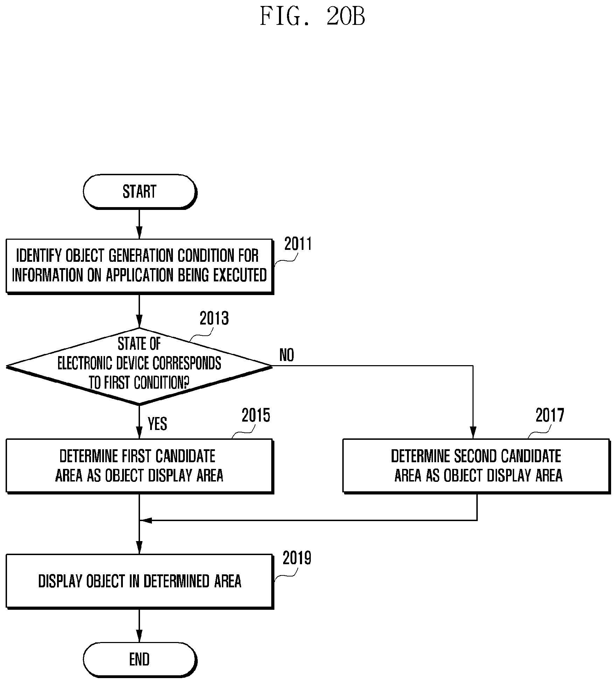

In FIG. 20B, the electronic device 200 identifies an object generation condition for executed application information in operation 2011. For example, through the object generation condition, function information to be triggered as the side surface touch input, a condition of the position (for example, landscape mode, portrait mode, or movement) of the electronic device, an area having the highest priority for displaying a button in each position of the electronic device 200, and an area having the highest priority for a pattern of the input side surface touch area may be identified.

In operation 2013, the electronic device 200 may determine whether the state of the electronic device corresponds to a first condition. For example, a case where the electronic device 200 is in the portrait mode may be configured as the first condition. This is only an example, and the first condition is not limited to the case where the electronic device 200 is in the portrait mode. Additionally or alternatively, a case where the electronic device 200 is in the landscape mode may be configured as the first condition.

In operation 2015, when the state of the electronic device 200 meets the first condition, the electronic device 200 may determine a first candidate area having the highest priority in the corresponding condition as the object display area.

When the state of the electronic device 200 does not meet the first condition (e.g., meets a second condition), the electronic device 200 may determine a second candidate area having the highest priority in the corresponding condition as the object display area in operation 2017.

The electronic device 200 may display an object in the determined object display area in operation 2019. The electronic device 200 may detect a static position of the electronic device 200 through the gesture sensor 240A before performing operation 2009 of displaying the object to determine a function use ready state of the user (e.g., a ready state for photography using the camera module 291). When the state is determined as a state in which the user can use the function (for example, the ready state for photography using the camera module 291), the electronic device 200 may perform operations 2001, 2003, 2005, and 2007 to display the object.

In operation 2003, the electronic device 200 may determine a candidate area for displaying an object within the area of the display 260.

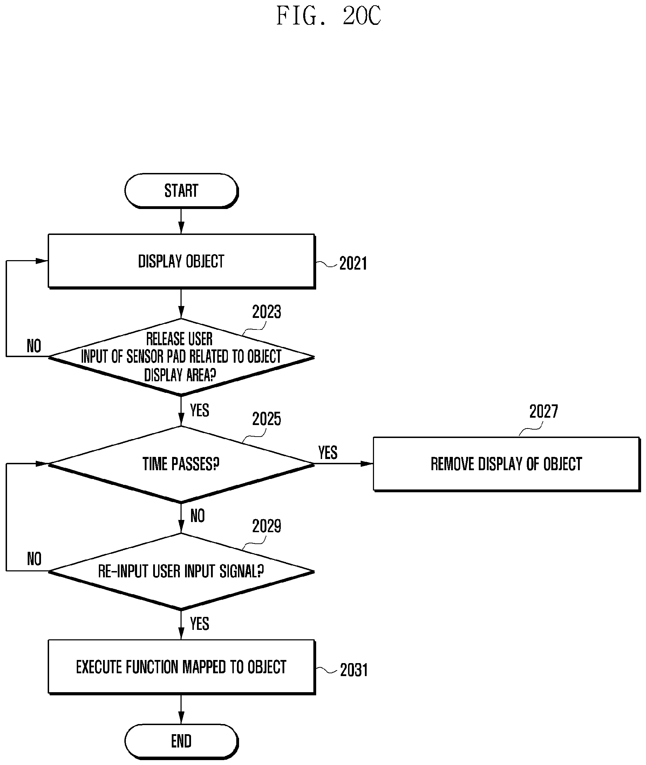

In FIG. 20C, when the electronic device 200 determines an object display area based on the plurality of pieces of collected touch input information by the user or the state information of the electronic device 200, the electronic device 200 may display the object in the determined area in operation 2021.

In operation 2023, the electronic device 200 determines whether an input of a side surface touch area related to the object display area is released. The electronic device 200 may determine whether the input on the side surface touch area related to the object display area is an input which applies pressure in operation 2023. The electronic device 200 may determine whether the input on the side surface touch area related to the object display area is a sliding input in operation 2023. The electronic device 200 may determine whether the input on the side surface touch area related to the object display area is a swipe input in operation 2023. The electronic device 200 may determine whether the input on the side surface touch area related to the object display area is a tap input in operation 2023. The electronic device 200 may determine whether the input on the side surface touch area related to the object display area is a double tap input in operation 2023. The electronic device 200 may include a flexible display 260, and may determine whether the input on the side surface touch area related to the object display area is an input which twists the flexible display 260 in operation 2023. The electronic device 200 may include the flexible display 260, and may determine whether the input on the side surface touch area related to the object display area is an input which pulls the flexible display 260 in operation 2023. The electronic device 200 may include the flexible display 260, and may determine whether the input on the side surface touch area related to the object display area is an input which bends the flexible display 260 in operation 2023.

When the electronic device 200 determines that the input on the side surface touch area related to the object display area is released, the electronic device 200 determines whether the release time passes within a predetermined time in operation 2025.

When it is determined that the release time does not pass within the predetermined time, the electronic device 200 determines whether a user input signal is re-input within the predetermined time in operation 2029.

In operation 2029, the electronic device 200 determines whether the user input signal is re-input within the predetermined time. When the user input signal is re-input within the predetermined time, the electronic device 200 provides a function mapped to the object in operation 2031.

When it is determined that the release time passes within the predetermined time, the electronic device 200 may remove the display of the object from the display area in operation 2027.

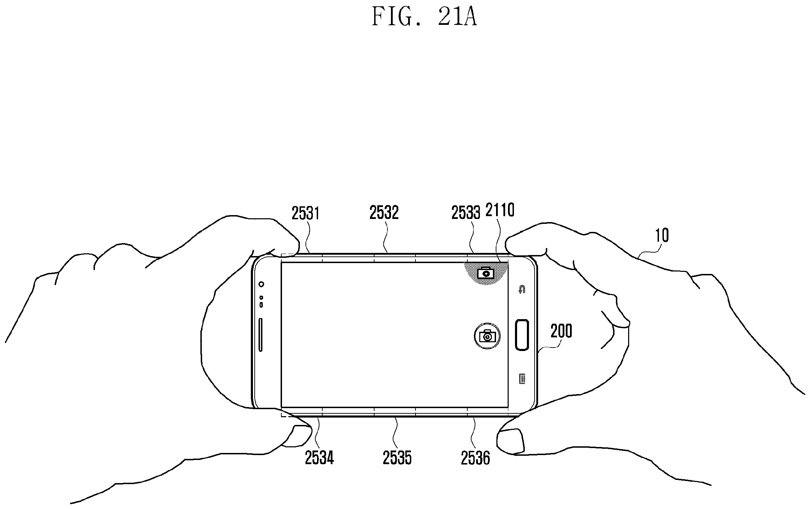

FIGS. 21A to 21E illustrate a method of displaying an object according to various embodiments of the present disclosure.

Referring to FIGS. 21A-21E, when the user 10 places the electronic device 200 in the landscape mode and causes the camera module 291 to face a subject, the electronic device 200 may receive information on a plurality of touch input areas by the user from one side of the electronic device 200. When the user raises edges of the electronic device 200 by using both hands, the electronic device 200 determines grip information according to the received information on the plurality of touch input areas.

For example, when the user 10 holds (grips) the edges of the electronic devices 200 with both hands to raise the electronic device 200, the electronic device 200 may determine a state where the user 10 grips four edges of the electronic device 200 with both hands as grip information. At this time, the electronic device 200 may display a function object in a display area adjacent to positions where the user 10 grips the electronic device 200 based on the grip information in a state where a camera function is executed. For example, an object 2110 may be a photography button related to a camera photography function. The object 2110 corresponds to a GUI element of a camera form. The GUI element of the camera form may be included in a shaded fan-shape in a semi-spherical type having a specific area and a diameter of the fan-shape in the semi-spherical type may face the side surface of the electronic device. This is only an example, and the object 2110 may be a polygon or include a curved surface, and one side thereof may face the side surface of the electronic device 200.

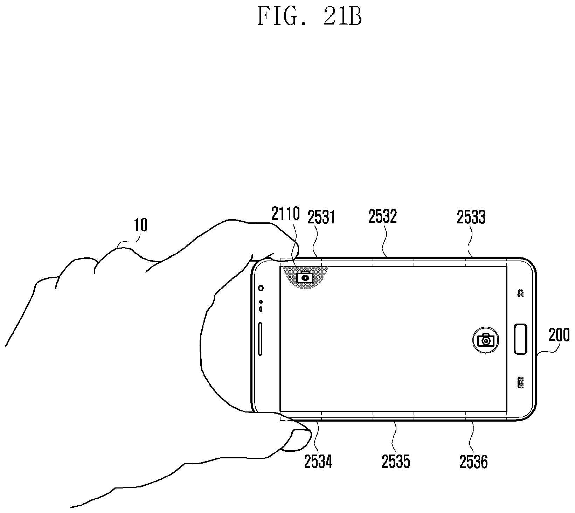

In FIG. 21B, when the user 10 places the electronic device 200 in the landscape mode and has the camera module 291 face a subject, the electronic device 200 may receive information on a plurality of touch input areas by the user from one side of the electronic device 200. When the user holds (grips) edges of the electronic device 200 with one hand to raise the electronic device 200, the electronic device 200 determines grip information according to the received information on the plurality of touch input areas.

For example, when the user 10 holds (grips) the edges of the electronic devices 200 with one hand to raise the electronic device 200, the electronic device 200 may determine a state where the user 10 grips two edges of the electronic device 200 with one hand as grip information. The electronic device 200 may display a function object in a display area adjacent to positions where the user 10 grips the electronic device 200 based on the grip information in a state where a camera function is executed. For example, the object 2110 may be a photography button related to a camera photography function.

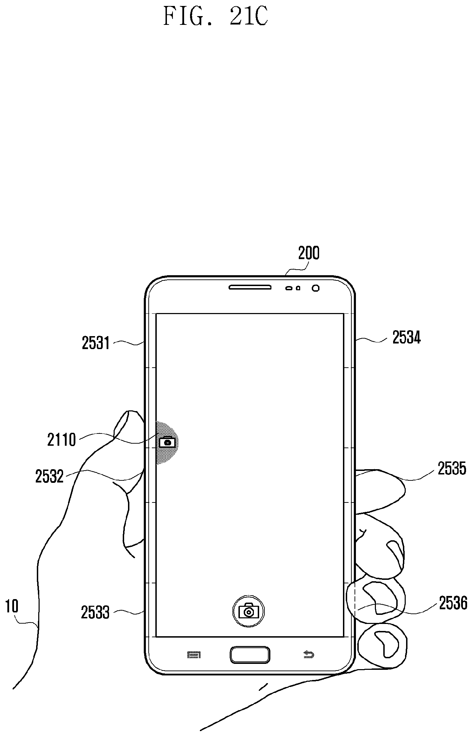

In FIG. 21C, when the user 10 places the electronic device 200 in the portrait mode and has the camera module 291 face a subject, the electronic device 200 may receive information on a plurality of touch input areas by the user from one side of the electronic device 200. When the user holds (grips) the electronic device 200 with one hand to raise the electronic device 200, the electronic device 200 determines grip information according to the received information on the plurality of touch input areas.

For example, when the user 10 vertically holds (grips) the electronic device 200 with one hand (for example, left hand) to raise the electronic device 200, the electronic device 200 may determine a state where the user 10 vertically grips the electronic device 200 with one hand (for example, left hand) as grip information. The electronic device 200 may display an object in a display area adjacent to a position where the user 10 grips the electronic device 200 based on the grip information in a state where a camera function is executed. For example, the object 2110 may be a photography button related to a camera photography function.

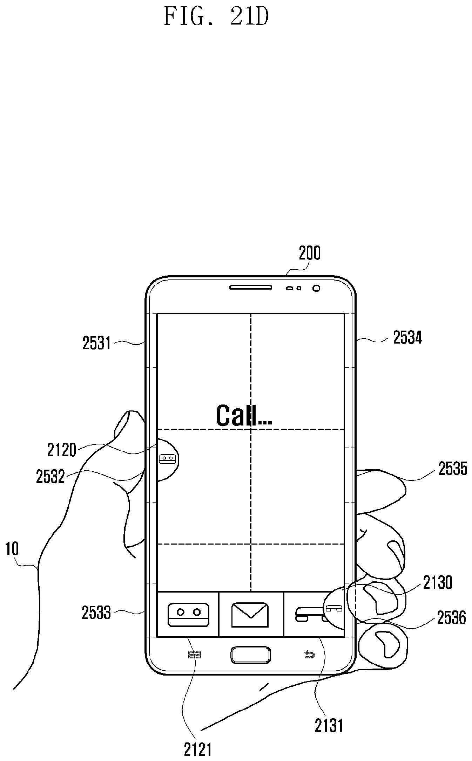

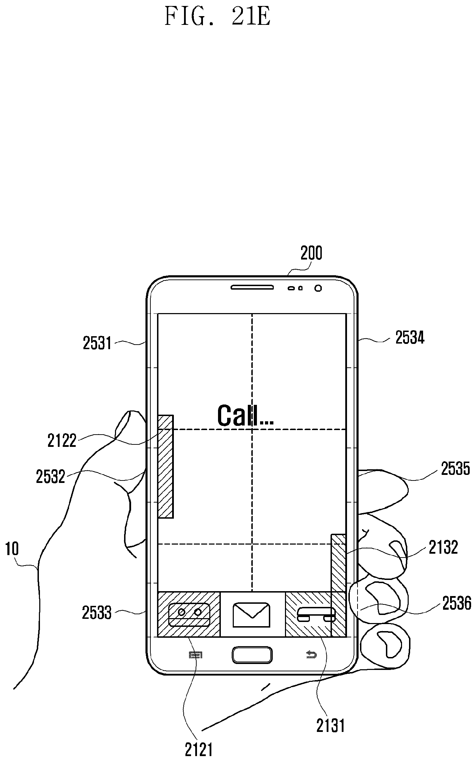

In FIGs. 21D and 21E, when the user 10 places the electronic device 200 in the portrait mode, the electronic device 200 may receive information on a plurality of touch input areas by the user from one side of the electronic device 200. When the user 10 holds (grips) the electronic devices 200 with one hand to raise the electronic device 200, the electronic device 200 may determine a state where the user 10 vertically grips the electronic device 200 with one hand as grip information. At this time, the electronic device 200 may display an object in a display area adjacent to a position where the user 10 grips the electronic device 200 based on the grip information in a state where a call function is executed. For example, an object 2120 may be a record button related to a call function and another object 2130 may be a call button related to the call function. At this time, the object may be an object 2122 having color, brightness, saturation, shape, or pattern similar or equal to that of an object 2121 displayed on the display 260 as illustrated in FIG. 21E. Another object may be an object 2132 having color, brightness, saturation, shape, or pattern similar or equal to that of an object 2131 displayed on the display 260 as illustrated in FIG. 21E.

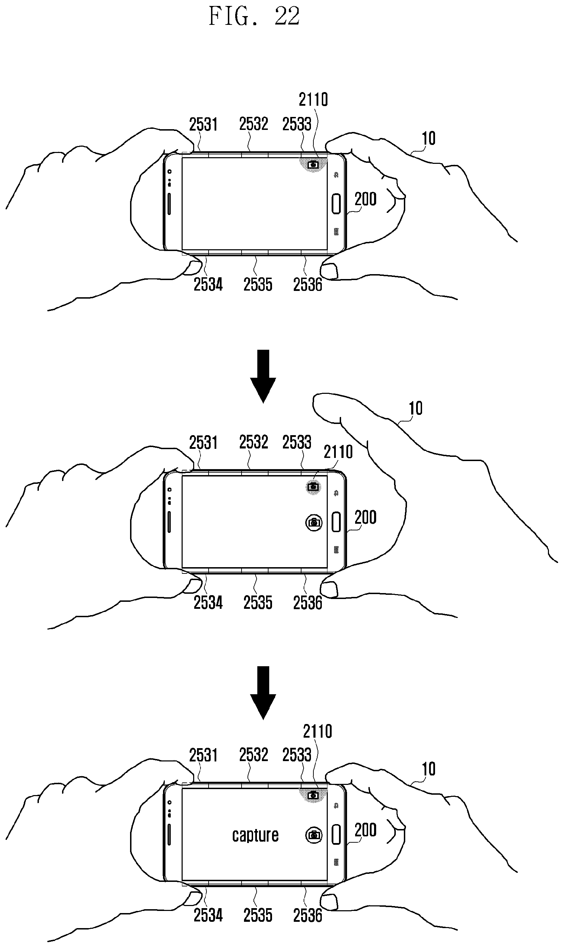

FIG. 22 illustrates a method of controlling functions of an electronic device according to an embodiment of the present disclosure.

Referring to FIG. 22, when the user 10 places the electronic device 200 in the landscape mode and has the camera module 291 face a subject, the electronic device 200 may receive information on a plurality of touch input areas by the user from one side of the electronic device 200. When the user holds (grips) edges of the electronic device 200 with both hands to raise the electronic device 200, the electronic device 200 determines grip information according to the received information on the plurality of touch input areas.

The electronic device 200 may determine a state where the user 10 grips four edges of the electronic device 200 with both hands as the grip information. The electronic device 200 may display an object in a display area adjacent to positions where the user 10 grips the electronic device 200 based on the grip information in a state where a camera function is executed. For example, the object 2110 may be a photography button related to a camera photography function. The object 2110 corresponds to a GUI element of a camera form. The GUI element of the camera form may be included in a shaded fan-shape in a semi-spherical type having a specific area and a diameter of the fan-shape in the semi-spherical type may face the side surface of the electronic device 200. This is only an example, and the object 2110 may be a polygon or include curved lines, and one side thereof may face the side surface of the electronic device 200.

When the user 10 releases the received information on the plurality of touch input areas related to the display area of the object 2110, the electronic device 200 determines whether a release time passes within a predetermined time. The electronic device 200 may display an object in a display area adjacent to positions where the user 10 grips the electronic device 200 based on the grip information in a state where a camera function is executed. For example, the object 2110 may be a photography button related to a camera photography function. The object 2110 is a GUI element of a camera form. The GUI element of the camera form may be included in a shaded circle having a specific area. This is only an example, and the object 2110 may be a polygon or include a curved surface.

In 2203 of FIG. 22, when the user input signal is re-input within the predetermined time, the electronic device 200 provides a function mapped to the object. For example, if the function mapped to the function object 2210 is a photography function, the electronic device 200 may photograph the subject through the camera module 291.

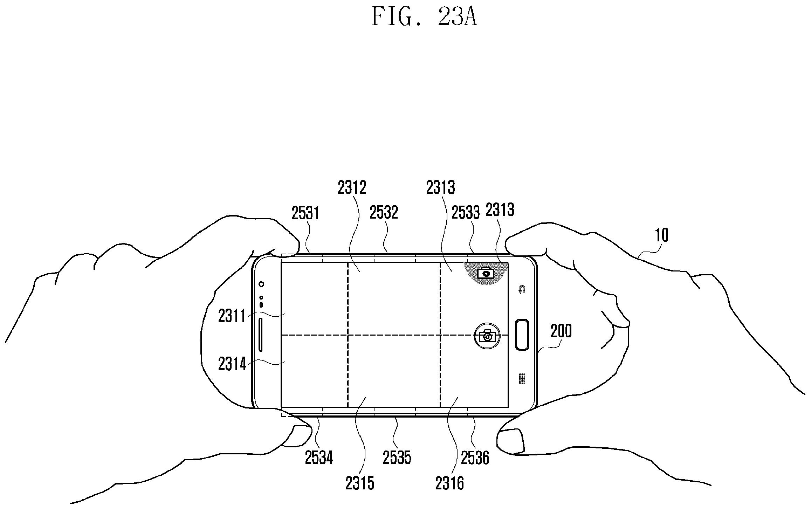

FIGS. 23A to 23E illustrate a method of displaying an object according to an embodiment of the present disclosure.

Referring to FIGS. 23A-23E, when the electronic device 200 has three sensing areas 2311, 2312, and 2313 on a first side and three sensing areas 2314, 2315, and 2316 on a second side, the electronic device 200 may pre-configure six object display areas corresponding to the number of contact areas through which sensing can be made. The electronic device 200 may configure candidate areas for generating objects based on side touch inputs related to the pre-configured object display areas and determine positions where the objects are displayed through the operations of FIGS. 20A to 20C. The electronic device 200 may determine the first area 2311, the third area 2313, the fourth area 2314, and the sixth area 2316 where the side touch inputs related to the object display areas are generated, as candidate areas for generating objects, and display the object in the third area 2313 which is the optimal position.

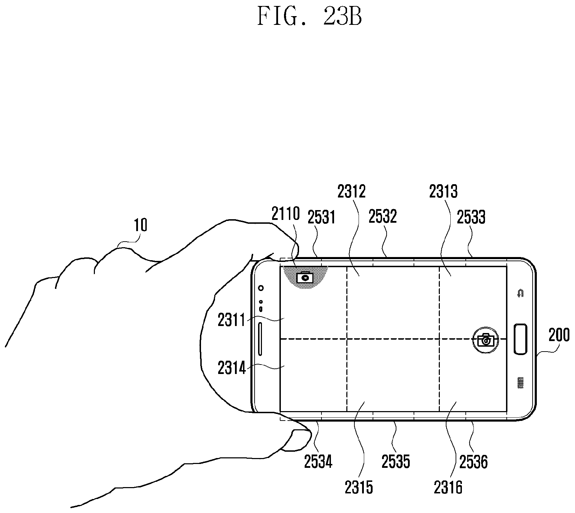

When two areas of the electronic device 200 touched by the right hand between both hands illustrated in FIG. 23A are released as illustrated in FIG. 23B, the electronic device 200 determines a candidate area of an upper left candidate area having a second priority as an area (the first area 2311) to display a photography button 2110.

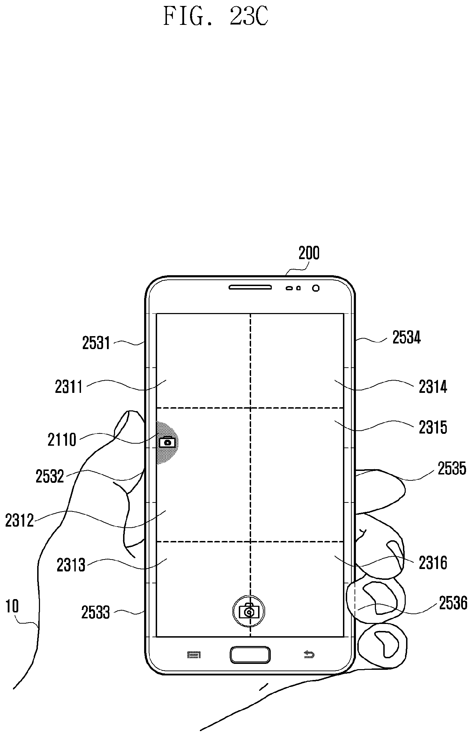

FIG. 23C illustrates an embodiment of a dynamic button generated when the electronic device 200 is in the portrait mode according to an embodiment of the present disclosure. The electronic device 200 may determine the second area 2312, the fifth area 2315, and the sixth area 2316 where the side touch inputs related to the object display areas are generated, as candidate areas for generating objects, and display the object in the second area 2312 which is an optimal position.

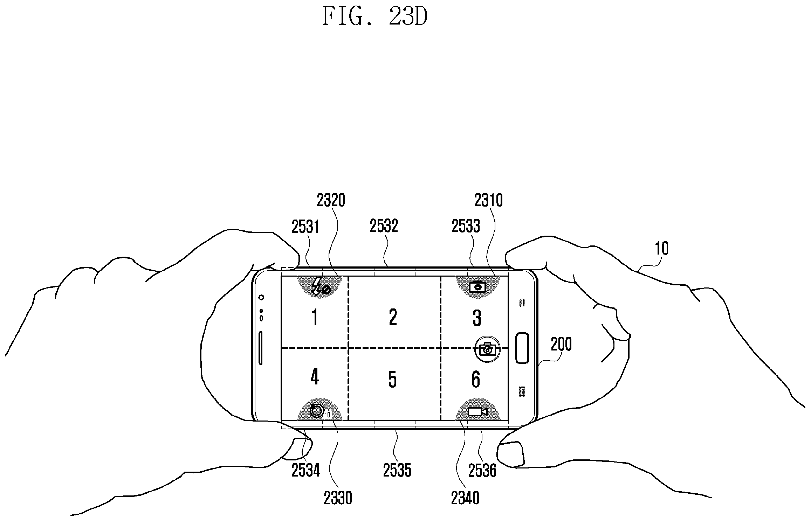

In FIG. 23D, when the electronic device 200 is in the landscape mode, the electronic device 200 may determine the first area 2311, the third area 2313, the fourth area 2314, and the sixth area 2316 where the side touch inputs related to the object display areas are generated, as candidate areas for generating objects and display one or more objects in each of the one or more areas (the first area 2311, the third area 2313, the fourth area 2314, and the sixth area 2316). The objects displayed in each of the one or more areas may be different from each other. For example, the electronic device 200 may display a flash-related object 2320 in the first area 2311, a capture-related object 2310 in the third area 2313, a photography timer-related object 2330 in the fourth area 2314, and a video-related object 2340 in the sixth area 2316.

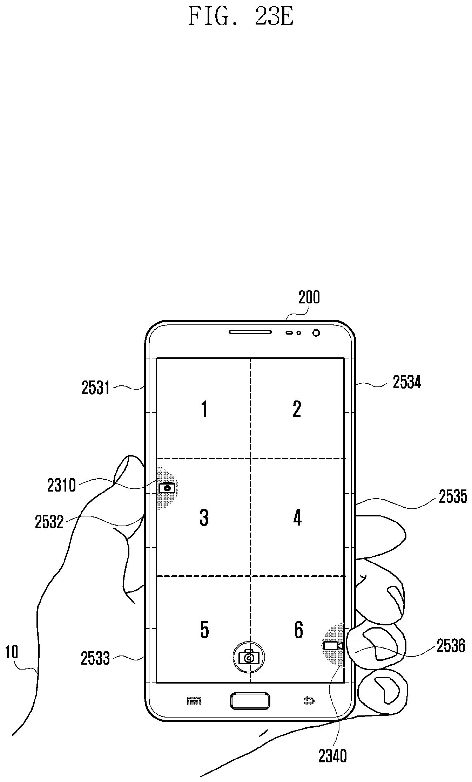

In FIG. 23E, when the electronic device 200 is in the portrait mode, the electronic device 200 may determine the third area 2313 and the sixth area 2316 where the side touch inputs related to the object display areas are generated, as candidate areas for generating objects and display one or more objects in each of the one or more areas (the third area 2313 and the sixth area 2316). The objects displayed in each of the one or more areas may be different from each other. For example, the electronic device 200 may display a capture-related object 2310 in the third area 2313 and the video-related object 2340 in the sixth area 2316.

At least one of a position, size, shaped or function of the display object may be changed based on the user input. For example, when the object is displayed on the display, at least one of the position, size, shape, or function of the object may be changed based on the user input for the display area related to the displayed area or side area. For example, when a drag input by the user is received in the display area displaying a function object, the electronic device 200 may change a position of the object and display the changed object in response to the corresponding input. In another example, when a drag input by the user is received in a side area related to the display displaying the function object, the electronic device 200 may change a size of the object in response to the corresponding input.

According to various embodiments of the present disclosure, at least some of the devices (for example, modules or functions thereof) or the method (for example, operations) according to the present disclosure may be implemented by a command stored in a computer-readable storage medium in a programming module form. When the command is executed by one or more processors (for example, the processor 210), the one or more processors may execute a function corresponding to the command. The computer-readable storage medium may be, for example, the memory 220. At least a part of the programming module may be implemented (for example, executed) by, for example, the processor 210. At least some of the programming modules may include, for example, a module, a program, a routine, a set of instructions or a process for performing one or more functions.

The computer-readable recording medium may include magnetic media such as a hard disk, a floppy disk, and a magnetic tape, optical media such as a Compact Disc Read Only Memory (CD-ROM) and a DVD, magneto-optical media such as a floptical disk, and hardware devices specially configured to store and perform a program instruction (for example, programming module), such as a Read Only Memory (ROM), a Random Access Memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component é elements according to various embodiments of the present disclosure may be executed sequentially, in parallel, repeatedly, or in a heuristic manner. Further, some operations may be executed according to another order or may be omitted, or other operations may be added.

While the present disclosure has been shown and described with reference to various embodiments thereof, it will be understood by those skilled in the art that various changes in form and details may be made therein without departing from the scope of the present disclosure.

## Claims

1. An electronic device (200) comprising:
a display (260) configured to output an image;
one or more sensor pads (2531 - 2536) for acquiring a user input;
at least one of an acceleration sensor (240E), a gyro sensor (240B) and a geomagnetic sensor (240D) configured to acquire orientation information corresponding to the electronic device (200); and
a controller (210) configured to:
when the orientation information indicates that the electronic device (200) is in a preset orientation (441), activate (445) the one or more sensor pads (2531 - 2536); when the orientation information indicates that the electronic device (200) is in the preset orientation (441), determine (447) whether the user input is acquired through the one or more sensor pads (2531 - 2536); when the user input is acquired, determine (449) a grip information on the electronic device (200) based on the user input acquired through the one or more sensor pads (2531 - 2536); and
provide (430) at least one of an application or a function corresponding to the grip information on the electronic device (200);
wherein a black mask of the display (260) is located on at least one of the one or more sensor pads (2531 - 2536).

2. The electronic device (200) of claim 1, further comprising:
a first speaker (282) and a second speaker (282), wherein the controller is further configured to output audio data through at least one of the first speaker (282) and the second speaker (282) based on at least one of the user input and the grip information.

3. The electronic device (200) of claim 1, wherein the controller (210) is further configured to provide at least one function of scrolling, enlarging, reducing, and switching information displayed on the display (260) based on the user input.

4. The electronic device (200) of claim 1, wherein the electronic device (200) provides a first application through a first area of the display (260) and a second application through a second area of the display (260), and wherein the controller (210) is further configured to control the first application through the user input when the user input corresponds to the first area and to control the second application through the user input when the user input corresponds to the second area.

5. The electronic device (200) of claim 1, wherein the controller (210) is further configured to provide a function of selecting one or more objects based on the user input.

6. The electronic device (200) of claim 1, wherein the controller (210) is further configured to provide a function of controlling the display (260) based on the grip information.

7. The electronic device (200) of claim 1, wherein the controller (260) is further configured to provide at least one of a function of reducing an entire screen and displaying the reduced screen based on the grip information, and a function of changing a position or form of a predetermined object area and displaying the changed area based on the grip information.

8. A control method for controlling an electronic device (200) that comprises a display (260), one or more sensor pads (2531 - 2536), a controller (210) and at least one of an acceleration sensor (240E), a gyro sensor (240B) and a geomagnetic sensor (240D); the control method comprising:
acquiring orientation information corresponding to the electronic device (200) through at least one of the acceleration sensor (240E), the gyro sensor (240B), and the geomagnetic sensor (240D);
when the orientation information indicates that the electronic device (200) is in a preset orientation (441), activating (445) the one or more sensor pads (2531 - 2536); when the orientation information indicates that the electronic device (200) is in the preset orientation (441), determining (447) whether a user input is acquired through the one or more sensor pads (2531 - 2536); when the user input is acquired, determining (449) a grip information on the electronic device (200) based on the user input acquired through the one or more sensor pads (2531 - 2536); and
providing (430) one of an application and a function on the electronic device (200) based on the grip information;
wherein a black mask of the display (260) is located on at least one of the one or more sensor pads (2531 - 2536).

9. The control method of claim 8, wherein determining the grip information comprises determining the grip information when a user input greater than or equal to a predetermined reference value is received.

10. The control method of claim 8, wherein providing the one of the application and the function comprises providing a function of executing a camera when predetermined grip information of the user or a predetermined input through the one or more sensor pads (2531 - 2536) is acquired.

11. The control method of claim 8, wherein providing the application or the function comprises providing at least one of an operation of executing a camera, a function of acquiring an image through a camera, a function of zooming in, a function of zooming out, a focus-related function, a function of selecting a camera menu, a function of switching between front and rear cameras, and a function of automatically executing a predetermined function.

## Patentansprüche

1. Elektronische Vorrichtung (200), aufweisend: eine Anzeige (260), die zum Ausgeben eines Bilds konfiguriert ist;
ein oder mehrere Sensor-Pads (2531 bis 2536) zum Erfassen einer Benutzereingabe; mindestens einen von einem Beschleunigungssensor (240E), einem Gyrosensor (240B) und einem geomagnetischen Sensor (240D), die konfiguriert sind, um Ausrichtungsinformationen zu erfassen, die der elektronischen Vorrichtung (200) entsprechen; und einen Controller (210), der konfiguriert ist zum:
Aktivieren (445) des einen oder der mehreren Sensor-Pads (2531 bis 2536), wenn die Ausrichtungsinformationen angeben, dass die elektronische Vorrichtung (200) sich in einer voreingestellten Ausrichtung (441) befindet;
Bestimmen (447), ob die Benutzereingabe durch das eine oder die mehreren Sensor-Pads (2531 bis 2536) erfasst wird, wenn die Ausrichtungsinformationen angeben, dass die elektronische Vorrichtung (200) sich in der voreingestellten Ausrichtung (441) befindet;
Bestimmen (449) einer Halteinformation an der elektronischen Vorrichtung (200) auf Grundlage der Benutzereingabe, die durch das eine oder die mehreren Sensor-Pads (2531 bis 2536) erfasst wird, wenn die Benutzereingabe erfasst wird; und;
Bereitstellen (430) von mindestens einem von einer Anwendung oder einer Funktion, die der Halteinformation an der elektronischen Vorrichtung (200) entsprechen;
wobei sich eine schwarze Maske der Anzeige (260) auf mindestens einem des einen oder der mehreren Sensor-Pads (2531 bis 2536) befindet.

2. Elektronische Vorrichtung (200) nach Anspruch 1, ferner aufweisend einen ersten Lautsprecher (282) und einen zweiten Lautsprecher (282),
wobei der Controller ferner konfiguriert ist, um Audiodaten über mindestens einen von dem ersten Lautsprecher (282) und dem zweiten Lautsprecher (282) auf Grundlage der Benutzereingabe und der Halteinformation auszugeben.

3. Elektronische Vorrichtung (200) nach Anspruch 1, wobei der Controller (210) ferner konfiguriert ist, um mindestens eine Funktion zum Scrollen, Vergrößern, Verkleinern und Umschalten von Informationen bereitzustellen, die auf der Anzeige (260) auf Grundlage der Benutzereingabe angezeigt werden.

4. Elektronische Vorrichtung (200) nach Anspruch 1, wobei die elektronische Vorrichtung (200) eine erste Anwendung über einen ersten Bereich der Anzeige (260) und eine zweite Anwendung über einen zweiten Bereich der Anzeige (260) bereitstellt; und
wobei der Controller (210) ferner konfiguriert ist, um die erste Anwendung über die Benutzereingabe zu steuern, wenn die Benutzereingabe dem ersten Bereich entspricht, und um die zweite Anwendung über die Benutzereingabe zu steuern, wenn die Benutzereingabe dem zweiten Bereich entspricht.

5. Elektronische Vorrichtung (200) nach Anspruch 1, wobei der Controller (210) ferner konfiguriert ist, um eine Funktion zum Auswählen von einem oder mehreren Objekten auf Grundlage der Benutzereingabe bereitzustellen.

6. Elektronische Vorrichtung (200) nach Anspruch 1, wobei der Controller (210) ferner konfiguriert ist, um eine Funktion zum Steuern der Anzeige (260) auf Grundlage der Halteinformation bereitzustellen.

7. Elektronische Vorrichtung (200) nach Anspruch 1, wobei der Controller (260) ferner konfiguriert ist, um mindestens eine Funktion zum Verkleinern einer gesamten Bildschirmanzeige und zum Anzeigen der verkleinerten Bildschirmanzeige auf Grundlage der Halteinformation und eine Funktion zum Ändern einer Position oder Form eines vordefinierten Objektbereichs und zum Anzeigen des geänderten Bereichs auf Grundlage der Halteinformationen bereitzustellen.

8. Steuerverfahren zum Steuern einer elektronischen Vorrichtung (200), die eine Anzeige (260), einen oder mehrere Sensor-Pads (2531 bis 2536), einen Controller (210) und mindestens einen von einem Beschleunigungssensor (240E), einem Gyrosensor (240B) und einem geomagnetischen Sensor (240D) aufweist; wobei das Steuerverfahren aufweist:
Erfassen von Ausrichtungsinformationen, die der elektronischen Vorrichtung (200) entsprechen, über mindestens einen von dem Beschleunigungssensor (240E), dem Gyrosensor (240B) und dem geomagnetischen Sensor (240D);
Aktivieren (445) des einen oder der mehreren Sensor-Pads (2531 bis 2536), wenn die Ausrichtungsinformationen angeben, dass die elektronische Vorrichtung (200) sich in einer voreingestellten Ausrichtung (441) befindet;
Bestimmen (447), ob eine Benutzereingabe durch das eine oder die mehreren Sensor-Pads (2531 bis 2536) erfasst wird, wenn die Ausrichtungsinformationen angeben, dass die elektronische Vorrichtung (200) sich in der voreingestellten Ausrichtung (441) befindet;
Bestimmen (449) einer Halteinformation an der elektronischen Vorrichtung (200) auf Grundlage der Benutzereingabe, die durch das eine oder die mehreren Sensor-Pads (2531 bis 2536) erfasst wird, wenn die Benutzereingabe erfasst wird; und;
Bereitstellen (430) von einem von einer Anwendung und einer Funktion der elektronischen Vorrichtung (200) auf Grundlage der Halteinformation;
wobei sich eine schwarze Maske der Anzeige (260) auf mindestens einem des einen oder der mehreren Sensor-Pads (2531 bis 2536) befindet.

9. Steuerverfahren nach Anspruch 8, wobei ein Bestimmen der Halteinformation ein Bestimmen der Halteinformation aufweist, wenn eine Benutzereingabe empfangen wird, die größer oder gleich einem vorbestimmten Referenzwert ist.

10. Steuerverfahren nach Anspruch 8, wobei ein Bereitstellen des einen von der Anwendung und der Funktion ein Bereitstellen einer Funktion zum Ausführen einer Kamera aufweist, wenn eine vorbestimmte Halteinformation des Benutzers oder eine vorbestimmte Eingabe durch das eine oder die mehreren Sensor-Pads (2531 bis 2536) erfasst wird.

11. Steuerverfahren nach Anspruch 8, wobei ein Bereitstellen der Anwendung oder der Funktion ein Bereitstellen von mindestens einem Vorgang zum Ausführen einer Kamera, einer Funktion zum Erfassen eines Bilds durch eine Kamera, einer Funktion zum Vergrößern, einer Funktion zum Verkleinern, einer fokusbezogenen Funktion, einer Funktion zum Auswählen eines Kameramenüs, einer Funktion zum Umschalten zwischen vorderen und rückwärtigen Kameras und einer Funktion zum automatischen Ausführen einer vorbestimmten Funktion aufweist.

## Revendications

1. Dispositif électronique (200) comprenant :
un affichage (260) configuré pour émettre une image ;
un ou plusieurs pavés de détection (2531 - 2536) destinés à acquérir une entrée utilisateur ; au moins l'un parmi un capteur d'accélération (240E), un capteur gyroscopique (240B) et un capteur géomagnétique (240D) configurés pour acquérir une information d'orientation correspondant au dispositif électronique (200) ; et
une unité de commande (210) configurée pour :
lorsque l'information d'orientation indique que le dispositif électronique (200) se trouve dans une orientation prédéfinie (441), activer (445) l'un ou plusieurs pavés de détection (2531 - 2536);
lorsque l'information d'orientation indique que le dispositif électronique (200) se trouve dans l'orientation prédéfinie (441), déterminer (447) si l'entrée utilisateur est acquise par le biais de l'un ou plusieurs pavés de détection (2531 - 2536) ;
lorsque l'entrée utilisateur est acquise, déterminer (449) une information de préhension sur le dispositif électronique (200) sur la base de l'entrée utilisateur acquise par le biais de l'un ou plusieurs pavés de détection (2531-2536) ; et
présenter (430) au moins l'une d'une application ou d'une fonction correspondant à l'information de préhension sur le dispositif électronique (200) ;
dans lequel un masque noir de l'affichage (260) se trouve sur au moins l'un de l'un ou plusieurs pavés de détection (2531-2536).

2. Dispositif électronique (200) selon la revendication 1, comprenant en outre :
un premier haut-parleur (282) et un deuxième haut-parleur (282),
dans lequel l'unité de commande est en outre configurée pour émettre des données audio par le biais d'au moins l'un du premier haut-parleur (282) et du deuxième haut-parleur (282) sur la base d'au moins l'une de l'entrée utilisateur et l'information de préhension.

3. Dispositif électronique (200) selon la revendication 1, dans lequel l'unité de commande (210) est en outre configurée pour présenter au moins une fonction parmi un défilement, agrandissement, réduction et basculement d'informations affichées sur l'affichage (260) sur la base de l'entrée utilisateur.

4. Dispositif électronique (200) selon la revendication 1, dans lequel le dispositif électronique (200) présente une première application par le biais d'une première zone de l'affichage (260) et une deuxième application par le biais d'une deuxième zone de l'affichage (260), et
dans lequel l'unité de commande (210) est en outre configurée pour commander la première application par le biais de l'entrée utilisateur lorsque l'entrée utilisateur correspond à la première zone et pour commander la deuxième application par le biais de l'entrée utilisateur lorsque l'entrée utilisateur correspond à la deuxième zone.

5. Dispositif électronique (200) selon la revendication 1, dans lequel l'unité de commande (210) est en outre configurée pour présenter une fonction de sélection d'un ou plusieurs objets sur la base de l'entrée utilisateur.

6. Dispositif électronique (200) selon la revendication 1, dans lequel l'unité de commande (210) est en outre configurée pour présenter une fonction de commande de l'affichage (260) sur la base de l'information de préhension.

7. Dispositif électronique (200) selon la revendication 1, dans lequel l'unité de commande (260) est en outre configurée pour présenter au moins l'une d'une fonction de réduction d'un écran complet et d'affichage de l'écran réduit sur la base de l'information de préhension, et une fonction de changement de position ou de forme d'une zone d'objet prédéterminée et d'affichage de la zone modifiée sur la base de l'information de préhension.

8. Procédé de commande destiné à commander un dispositif électronique (200) qui comprend un affichage (260), un ou plusieurs pavés de détection (2531 - 2536), une unité de commande (210) et au moins l'un parmi un capteur d'accélération (240E), un capteur gyroscopique (240B) et un capteur géomagnétique (240D) ; le procédé de commande comprenant :
l'acquisition d'une information d'orientation correspondant au dispositif électronique (200) par le biais d'au moins l'un parmi le capteur d'accélération (240E), le capteur gyroscopique (240B) et le capteur géomagnétique (240D) ;
lorsque l'information d'orientation indique que le dispositif électronique (200) se trouve dans une orientation prédéfinie (441), activer (445) l'un ou plusieurs pavés de détection (2531 - 2536);
lorsque l'information d'orientation indique que le dispositif électronique (200) se trouve dans l'orientation prédéfinie (441), déterminer (447) si une entrée utilisateur est acquise par le biais de l'un ou plusieurs pavés de détection (2531 - 2536) ;
lorsque l'entrée utilisateur est acquise, déterminer (449) une information de préhension sur le dispositif électronique (200) sur la base de l'entrée utilisateur acquise par le biais de l'un ou plusieurs pavés de détection (2531 - 2536) ; et
présenter (430) l'une d'une application et d'une fonction sur le dispositif électronique (200) sur la base de l'information de préhension ;
dans lequel un masque noir de l'affichage (260) se trouve sur au moins l'un de l'un ou plusieurs pavés de détection (2531 - 2536).

9. Procédé de commande selon la revendication 8, dans lequel la détermination de l'information de préhension comprend la détermination de l'information de préhension lorsqu'une entrée utilisateur supérieure ou égale à une valeur de référence prédéterminée est reçue.

10. Procédé de commande selon la revendication 8, dans lequel la présentation de l'une de l'application et de la fonction comprend la présentation d'une fonction d'exécution d'une caméra lorsqu'une information de préhension prédéterminée de l'utilisateur ou une entrée prédéterminée par le biais de l'un ou plusieurs pavés de détection (2531-2536) est acquise.

11. Procédé de commande selon la revendication 8, dans lequel la présentation de l'application ou de la fonction comprend la présentation d'au moins l'une d'une opération d'exécution d'une caméra, une fonction d'acquisition d'une image par le biais d'une caméra, une fonction de zoom avant, une fonction de zoom arrière, une fonction de mise au point, une fonction de sélection d'un menu caméra, une fonction de basculement entre les caméras avant et arrière, et une fonction d'exécution automatique d'une fonction prédéterminée.
